# EUROPEAN PATENT APPLICATION

(11) **EP 4 475 121 A1**
(43) Date of publication of application: **11.12.2024**
(21) Application number: 22930351.6
(22) Date of filing: 11.03.2022
(51) Int. Cl.: G10L 17/18, G10L 15/16, G10L 15/06

(54) **INTERACTIVE SPEECH SIGNAL PROCESSING METHOD, RELATED DEVICE AND SYSTEM**

(71) Applicant: Huawei Technologies Co., Ltd., Shenzhen, Guangdong 518129 (CN)
(72) Inventor: YUAN, Long, Shenzhen, Guangdong 518129 (CN); NIE, Weiran, Shenzhen, Guangdong 518129 (CN)
(74) Representative: Pfenning, Meinig & Partner mbB
(86) International application number: PCT/CN2022/080464
(87) International publication number: WO 2023/168713

(57) **Abstract**

Embodiments of this application provide an interaction voice signal processing method, a related device, and a system. In the interaction voice signal processing method, an interaction voice signal may be obtained, where the interaction voice signal includes at least one single-channel voice signal. Then, multi-channel frequency domain feature data of the interaction voice signal is determined, where the multi-channel frequency domain feature data indicates a frequency domain feature of the at least one single-channel voice signal. Then, it is determined, based on the multi-channel frequency domain feature data, that the interaction voice signal includes a wakeup voice signal, and it is determined, based on the multi-channel frequency domain feature data, that the wakeup voice signal in the interaction voice signal is from a first voice capturing object. According to this application, a wakeup waiting delay of a user can be shortened, and resources occupied by wakeup determining can be reduced.

## Description

### TECHNICAL FIELD

This application relates to the audio processing field, and in particular, to an interaction voice signal processing method, a related device, and a system.

### BACKGROUND

With development of voice interaction technologies, voice interaction modules may be integrated into increasingly more intelligent terminals, to interact with users based on the voice interaction modules in a voice manner. To reduce resources occupied by a voice interaction module, a voice wakeup module may be used as a startup entry of the voice interaction module, so that only when the voice wakeup module monitors that a user performs interaction wakeup, the voice interaction module is started to perform subsequent voice interaction with the user.

In the conventional technology, a microphone array is usually configured to capture a voice signal in an environment, to perform wakeup determining. There may be a plurality of voice signals captured by the microphone array, only one or more of the voice signals may include a wakeup instruction of the user, and other voice signals may be only noise. To improve a success rate in a noise environment, a sound source (that is, the user who performs interaction wakeup) may be positioned by using the microphone array, and then the voice wakeup module performs wakeup determining on one or more voice signals of the sound source. In this manner, sound source positioning and wakeup determining for performing wakeup by using the voice signal of the sound source need to be performed in serial, and a process is cumbersome. Consequently, a wakeup waiting delay of the user is long. In addition, in a scenario of a plurality of sound sources, after sound source positioning, the voice wakeup module needs to separately perform wakeup determining on voice signals of the sound sources, and a large quantity of computing resources are occupied.

### SUMMARY

Embodiments of this application provide an interaction voice signal processing method, a related device, and a system. According to this application, a wakeup waiting delay of a user can be shortened, and resources occupied by wakeup determining can be reduced.

According to a first aspect, an embodiment of this application provides an interaction voice signal processing method. In the method, an interaction voice signal may be obtained, where the interaction voice signal includes at least one single-channel voice signal. Then, multi-channel frequency domain feature data of the interaction voice signal is determined, where the multi-channel frequency domain feature data indicates a frequency domain feature of the at least one single-channel voice signal. Then, it is determined, based on the multi-channel frequency domain feature data, that the interaction voice signal includes a wakeup voice signal, and it is determined, based on the multi-channel frequency domain feature data, that the wakeup voice signal in the interaction voice signal is from a first voice capturing object.

The wakeup voice signal may be one or more preset voice signals used for wakeup, and one wakeup voice signal may include one or more of the following voice signals: a digital voice signal, a Chinese voice signal, a foreign language voice signal, a letter voice signal, and the like. The first voice capturing object is one or more of a plurality of voice capturing objects, and the plurality of voice capturing objects may be distinguished based on different spatial position division.

In the interaction voice signal processing method, for the multi-channel frequency domain feature data, both feature data used for a process of determining that the interaction voice signal includes the wakeup signal and feature data used for a process of determining a source of the wakeup voice signal in the interaction voice signal are the multi-channel frequency domain feature data. Therefore, an action of determining the multi-channel frequency domain feature data is shared by the foregoing two processes, to save a part of processing time and processing resources. In addition, the foregoing two processes may be processed in parallel, to further shorten a waiting delay after the user sends the wakeup voice signal, and a plurality of single-channel voice signals in the interaction voice signal may also be processed at the same time, to further reduce consumption and save processing resources.

With reference to the first aspect, in an alternative implementation, a specific implementation of determining multi-channel frequency domain feature data of the interaction voice signal may be: performing framing processing on the single-channel voice signal to obtain a plurality of interaction voice signal frames; obtaining signal frame frequency domain feature data of the interaction voice signal frames by using a filter bank; and determining the multi-channel frequency domain feature data based on the signal frame frequency domain feature data.

With reference to the first aspect, in an alternative implementation, a specific manner of determining the multi-channel frequency domain feature data based on the signal frame frequency domain feature data may be: splicing the signal frame frequency domain feature data of the interaction voice signal frames with signal frame frequency domain feature data of semantic-related frames; and determining the multi-channel frequency domain feature data based on spliced signal frame frequency domain feature data. The semantic-related frame is one or more voice signal frames that belong to a same single-channel voice signal as the interaction voice signal frame and that are adjacent to the interaction voice signal frame in time domain. The signal frame frequency domain feature data of the interaction voice signal frames is spliced with the signal frame frequency domain feature data of the semantic-related frames, so that more context information can be fused, and the obtained multi-channel frequency domain feature data is more accurate.

With reference to the first aspect, in an alternative implementation, a specific manner of determining, based on the multi-channel frequency domain feature data, that the interaction voice signal includes a wakeup voice signal may be: determining a first prediction parameter based on the multi-channel frequency domain feature data, where the first prediction parameter is used to determine a probability that the interaction voice signal includes the wakeup voice signal; and when the first prediction parameter meets a first parameter condition, determining that the interaction voice signal includes the wakeup voice signal.

With reference to the first aspect, in an alternative implementation, the wakeup voice signal includes at least one type of wakeup audio unit, the interaction voice signal includes a plurality of voice segment signals sequentially divided based on capturing time, and the first prediction parameter indicates a probability that the voice segment signal includes the wakeup audio unit. Prediction is performed on a wakeup audio unit with a small granularity, to improve prediction accuracy.

With reference to the first aspect, in an alternative implementation, the first voice capturing object includes any one of the following: a first microphone channel, a first sound capturing area, or a target timbre character in a second sound capturing area.

With reference to the first aspect, in an alternative implementation, when the first voice capturing object includes a child timbre character in the second sound capturing area, an operation mode instruction may be further sent, where the operation mode instruction is used to trigger a system to enter an operation mode for a child. This improves security of device operations.

According to a second aspect, an embodiment of this application provides a neural network model-based interaction voice signal processing method. In the method, an interaction voice signal may be obtained, and then frequency domain feature data of the interaction voice signal is obtained, where the frequency domain feature data indicates a frequency domain feature of the interaction voice signal. The frequency domain feature data is input into a neural network model, and prediction parameter is output, where the prediction parameter includes a first prediction parameter and a second prediction parameter, the first prediction parameter is used to determine that the interaction voice signal includes a wakeup voice signal, and the second prediction parameter is used to determine that the wakeup voice signal in the interaction voice signal is from a first voice capturing object.

In the neural network model-based interaction voice signal processing method in this embodiment, the first prediction parameter and the second prediction parameter may be output based on a same neural network model, so that whether the interaction voice signal includes the wakeup voice signal and a source of the wakeup voice signal may be determined in an end-to-end manner. This achieves high determining efficiency, shortens a wakeup waiting delay of a user, and determines a plurality of single-channel voice signals at one time for an interaction voice signal including the plurality of single-channel voice signals, thereby reducing consumption of processing resources.

With reference to the second aspect, in an alternative implementation, a specific manner of obtaining frequency domain feature data of the interaction voice signal may be: performing framing processing on the interaction voice signal to obtain a plurality of interaction voice signal frames; obtaining signal frame frequency domain feature data of the interaction voice signal frames by using a filter bank; and determining the frequency domain feature data of the interaction voice signal based on the signal frame frequency domain feature data.

With reference to the second aspect, in an alternative implementation, the interaction voice signal includes at least one single-channel voice signal, the frequency domain feature data includes at least one piece of single-channel frequency domain feature data, and the single-channel frequency domain feature data indicates a frequency domain feature of the single-channel voice signal.

With reference to the second aspect, in an alternative implementation, a specific manner of determining the frequency domain feature data of the interaction voice signal based on the signal frame frequency domain feature data may be: splicing the signal frame frequency domain feature data of the interaction voice signal frames with signal frame frequency domain feature data of semantic-related frames, where the semantic-related frame is one or more voice signal frames that belong to a same single-channel voice signal as the interaction voice signal frame and that are adjacent to the interaction voice signal frame in time domain; and obtaining the frequency domain feature data of the interaction voice signal based on a spliced signal frame frequency domain feature data combination. The signal frame frequency domain feature data of the interaction voice signal frames is spliced with the signal frame frequency domain feature data of the semantic-related frames, so that more context information can be fused, and the obtained multi-channel frequency domain feature data is more accurate.

With reference to the second aspect, in an alternative implementation, the wakeup voice signal includes at least one wakeup audio unit, the interaction voice signal includes a plurality of voice segment signals sequentially divided based on capturing time, the first prediction parameter includes a plurality of first prediction probabilities, and the first prediction probability indicates a probability that the voice segment signal includes each wakeup audio unit. Prediction is performed on a wakeup audio unit with a small granularity, to improve prediction accuracy.

With reference to the second aspect, in an alternative implementation, when the first prediction parameter meets a first parameter condition, the first prediction parameter is used to determine that the interaction voice signal includes the wakeup voice signal; or when the first prediction parameter does not meet the first parameter condition, the first prediction parameter is used to determine that the interaction voice signal does not include the wakeup voice signal.

According to a third aspect, an embodiment of this application provides a neural network model training method. In the method, a sample interaction voice signal may be obtained, where the sample interaction voice signal includes a wakeup state label and a capturing object label, then frequency domain feature data of the sample interaction voice signal is obtained, and the frequency domain feature data is input into a neural network model to obtain a prediction parameter, where the prediction parameter includes a first prediction parameter and a second prediction parameter. The first prediction parameter is used to determine that the sample interaction voice signal includes a wakeup voice signal, or used to determine that the sample interaction voice signal does not include the wakeup voice signal. The second prediction parameter is used to determine a source of the wakeup voice signal, and adjust a model parameter of the neural network model based on the wakeup state label, the capturing object label, and the prediction parameter.

According to the method, the neural network model may be obtained through end-to-end training. Based on the neural network model, the first prediction parameter and the second prediction parameter may be output in parallel for the interaction voice signal, so that whether the interaction voice signal includes the wakeup voice signal and a source of the wakeup voice signal may be determined in an end-to-end manner. This achieves high determining efficiency, shortens a wakeup waiting delay of a user, and determines a plurality of single-channel voice signals at one time for an interaction voice signal including the plurality of single-channel voice signals, thereby reducing consumption of processing resources.

With reference to the third aspect, in an alternative implementation, a specific manner of obtaining frequency domain feature data of the sample interaction voice signal may be: performing framing processing on the sample interaction voice signal to obtain a plurality of sample interaction voice signal frames; obtaining signal frame frequency domain feature data of the sample interaction voice signal frames by using a filter bank; and determining the frequency domain feature data of the sample interaction voice signal based on the signal frame frequency domain feature data.

With reference to the third aspect, in an alternative implementation, a specific manner of obtaining frequency domain feature data of the sample interaction voice signal may be: splicing the signal frame frequency domain feature data of the sample interaction voice signal frames with signal frame frequency domain feature data of semantic-related frames, where the semantic-related frame is one or more voice signal frames that belong to a same single-channel voice signal as the sample interaction voice signal frame and that are adjacent to the sample interaction voice signal frame in time domain; and obtaining the frequency domain feature data of the sample interaction voice signal based on a spliced signal frame frequency domain feature data combination. The signal frame frequency domain feature data of the sample interaction voice signal frames is spliced with the signal frame frequency domain feature data of the semantic-related frames, so that more context information can be fused, and the obtained multi-channel frequency domain feature data is more accurate.

With reference to the third aspect, in an alternative implementation, the wakeup voice signal includes at least one type of wakeup audio unit, there are a plurality of types of wakeup state labels, and one type of wakeup state label indicates that the sample interaction voice signal includes one type of wakeup audio unit, or indicates that the sample interaction voice signal includes an audio unit other than the wakeup audio unit. In comparison to learning of the wakeup state label by the neural network model at a granularity of the wakeup voice signal, with learning of the wakeup state label by the neural network model at a granularity of the wakeup audio unit, a neural network model with strong prediction performance may be obtained through training based on a small sample training set.

With reference to the third aspect, in an alternative implementation, the wakeup audio unit includes one or more of the following units: a character unit, a word unit, a letter unit, a phoneme unit, and a syllable unit.

With reference to the third aspect, in an alternative implementation, the capturing object label indicates that the sample interaction voice signal is from a first voice capturing object, and the first voice capturing object includes any one of the following objects: a first microphone channel, a first sound capturing area, or a target timbre character in a second sound capturing area.

With reference to the third aspect, in an alternative implementation, a specific manner of adjusting a model parameter of the neural network model based on the wakeup state label, the capturing object label, and the prediction parameter may be: determining a wakeup loss function based on the first prediction parameter and the wakeup state label; determining a positioning loss function based on the second prediction parameter and the capturing object label; and adjusting the model parameter of the neural network model based on the wakeup loss function and the positioning loss function.

According to a fourth aspect, an embodiment of this application provides an interaction voice signal processing apparatus, where the apparatus includes a first obtaining unit, a first extraction unit, a first processing unit, and a second processing unit.

The first obtaining unit is configured to obtain an interaction voice signal, where the interaction voice signal includes at least one single-channel voice signal. The first extraction unit is configured to determine multi-channel frequency domain feature data of the interaction voice signal. The first processing unit is configured to determine, based on the multi-channel frequency domain feature data, that the interaction voice signal includes a wakeup voice signal. The second processing unit is configured to determine, based on the multi-channel frequency domain feature data, that the wakeup voice signal in the interaction voice signal is from a first voice capturing obj ect.

According to a fifth aspect, an embodiment of this application provides a neural network model-based interaction voice signal processing apparatus, where the apparatus includes a second obtaining unit, a second extraction unit, and a third processing unit.

The second obtaining unit is configured to obtain an interaction voice signal. The second extraction unit is configured to obtain frequency domain feature data of the interaction voice signal. The third processing unit is configured to input the frequency domain feature data into a neural network model, and output a prediction parameter, where the prediction parameter includes a first prediction parameter and a second prediction parameter, the first prediction parameter is used to determine that the interaction voice signal includes a wakeup voice signal, and the second prediction parameter is used to determine that the wakeup voice signal in the interaction voice signal is from a first voice capturing object.

According to a sixth aspect, an embodiment of this application provides a neural network model training apparatus, where the apparatus includes a third obtaining unit, a third extraction unit, and an adjustment unit.

The third obtaining unit is configured to obtain a sample interaction voice signal, where the sample interaction voice signal includes a wakeup state label and a capturing object label. The third extraction unit is configured to obtain frequency domain feature data of the sample interaction voice signal, and input the frequency domain feature data into a neural network model to obtain a prediction parameter, where the prediction parameter includes a first prediction parameter and a second prediction parameter, the first prediction parameter is used to determine that the sample interaction voice signal includes a wakeup voice signal, or is used to determine that the sample interaction voice signal does not include the wakeup voice signal, and the second prediction parameter is used to determine that the wakeup voice signal is from a first voice capturing object. The adjustment unit is configured to adjust a model parameter of the neural network model based on the wakeup state label, the capturing object label, and the prediction parameter.

According to a seventh aspect, an embodiment of this application provides a processing device, where the device includes a memory and a processor. The memory is configured to store instructions, and the processor is configured to run the instructions in the memory, to perform the interaction voice signal processing method provided in the first aspect and any one of the possible implementations of the first aspect of embodiments of this application, or perform the neural network model-based interaction voice signal processing method provided in the second aspect and any one of the possible implementations of embodiments of this application.

According to an eighth aspect, an embodiment of this application provides a processing device, where the device includes a memory and a processor. The memory is configured to store instructions, and the processor is configured to run the instructions in the memory, to perform the neural network model training method provided in the third aspect and any one of the possible implementations of the third aspect of embodiments of this application.

According to a ninth aspect, an embodiment of this application provides a vehicle, where the vehicle includes a vehicle body, the vehicle body includes a microphone array, the microphone array is configured to capture an interaction voice signal, and the vehicle further includes any interaction voice signal processing apparatus provided in embodiments of this application, or further includes any neural network model-based interaction voice signal processing apparatus provided in embodiments of this application, or further includes any processing device provided in embodiments of this application.

According to a tenth aspect, an embodiment of this application provides a neural network model training system. The system includes a microphone array, a processing device, and a vehicle. The microphone array and the processing device are disposed inside a vehicle body. The microphone array is configured to capture a sample interaction voice signal inside the vehicle body of the vehicle, and the processing device is configured to perform, on the sample interaction voice signal, the neural network model training method provided in the third aspect and any one of the possible implementations of the third aspect of embodiments of this application, to obtain the neural network model provided in the second aspect and any one of the possible implementations of embodiments of this application.

According to an eleventh aspect, an embodiment of this application provides a computer program product. The computer program product includes computer program code. When the computer program code is run on a computer, the computer performs the interaction voice signal processing method in the first aspect and any one of the possible implementations of the first aspect, or performs the neural network model-based interaction voice signal processing method in the second aspect and any one of the possible implementations of the second aspect.

According to a twelfth aspect, an embodiment of this application provides a chip, where the chip includes a processor and a communication interface, and the processor is coupled to the communication interface and is configured to implement the interaction voice signal processing method provided in the first aspect or any one of the optional implementations, or implement the neural network model-based interaction voice signal processing method in the second aspect and any one of the possible implementations of the second aspect, or implement the neural network model training method in the third aspect and any one of the possible implementations of the third aspect.

According to a thirteenth aspect, an embodiment of this application provides a computer-readable storage medium, where the computer-readable medium stores instructions. When the instructions are run on a computer, the computer is enabled to perform the interaction voice signal processing method provided in the first aspect or any one of the optional implementations, or perform the neural network model-based interaction voice signal processing method in the second aspect and any one of the possible implementations of the second aspect, or perform the neural network model training method in the third aspect and any one of the possible implementations of the third aspect.

In the interaction voice signal processing method provided in this application, results of two aspects may be determined in parallel based on the multi-channel frequency domain feature data of the interaction voice signal. In one aspect, it may be determined that the interaction voice signal includes the wakeup voice signal, and in the other aspect, it is determined that the wakeup voice signal in the interaction voice signal is from the first voice capturing object. This not only can shorten the waiting delay after the user sends the wakeup voice signal, but also can save processing resources. In a process of determining the multi-channel frequency domain feature data of the interaction voice signal, the signal frame frequency domain feature data may be spliced, and more context information may be fused through splicing, so that the determined multi-channel frequency domain feature data is more accurate. In addition, in a process of determining the first prediction parameter based on the multi-channel frequency domain feature data, the wakeup audio unit with the small granularity may be predicted, thereby improving prediction accuracy. In addition, when it is determined that the wakeup voice signal in the interaction voice signal is from the child timbre character in the second sound capturing area, the operation mode instruction may be further sent to trigger the system to enter the operation mode for the child, thereby ensuring security of device operations.

According to the neural network model-based interaction voice signal processing method provided in this application, a same neural network model may predict that the interaction voice signal includes the wakeup voice signal and that the wakeup voice signal is from the first voice capturing object. Therefore, determining efficiency is high, and processing resources are saved. In a process of determining the frequency domain feature of the interaction voice signal, the signal frame frequency domain feature data may be spliced, and more context information may be fused through splicing, so that the determined multi-channel frequency domain feature data is more accurate. In addition, in a process of determining the first prediction parameter, the wakeup audio unit with the small granularity may be predicted, thereby improving prediction accuracy.

According to the neural network model training method provided in this application, a neural network model can be trained in an end-to-end manner, to implement parallel prediction that the interaction voice signal includes the wakeup voice signal and that the wakeup voice signal is from the first voice capturing object. Therefore, determining efficiency is high, and resource consumption is reduced. The signal frame frequency domain feature data of the sample interaction voice signal frame is spliced with the signal frame frequency domain feature data of the semantic-related frame, so that more context information can be fused, and the obtained multi-channel frequency domain feature data is more accurate. In addition, the wakeup state label of the sample may be used to mark the wakeup audio unit. Through learning of a label of a small granularity, a neural network model with strong prediction performance may be obtained through training based on a small sample training set.

### BRIEF DESCRIPTION OF DRAWINGS

FIG. 1 is a system diagram of an interaction voice signal processing system according to an embodiment of this application;
FIG. 2 is a schematic flowchart of an interaction voice signal processing method according to an embodiment of this application;
FIG. 3 is a neural network model-based interaction voice signal processing method according to an embodiment of this application;
FIG. 4 is a diagram of a neural network model according to an embodiment of this application;
FIG. 5 is a diagram of data output from a softmax output layer of a wakeup decoding module according to an embodiment of this application;
FIG. 6 and FIG. 7 are schematic flowcharts of neural network model-based interaction voice signal processing methods according to an embodiment of this application;
FIG. 8 is a diagram of a neural network training system according to an embodiment of this application;
FIG. 9 is a schematic flowchart of a neural network model training method according to an embodiment of this application;
FIG. 10 is a diagram of a structure of an interaction voice signal processing apparatus according to an embodiment of this application;
FIG. 11 is a diagram of a structure of a neural network model-based interaction voice signal processing apparatus according to an embodiment of this application;
FIG. 12 is a diagram of a structure of a neural network model training apparatus according to an embodiment of this application;
FIG. 13 is a diagram of a structure of a processing device according to an embodiment of this application;
FIG. 14 is a diagram of a structure of another processing device according to an embodiment of this application;
FIG. 15 is a diagram of a system architecture according to an embodiment of this application; and
FIG. 16 is a diagram of a structure of hardware of a chip according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are merely a part rather than all of embodiments of this application. All other embodiments obtained by a person of ordinary skill in the art based on embodiments of this application without creative efforts shall fall within the protection scope of this application.

Embodiments of this application provide an interaction voice signal processing method, a neural network model-based interaction voice signal processing method, a related device, and a system. The foregoing interaction voice signal processing method and the neural network-based interaction voice signal processing method may be implemented in a plurality of scenarios.

The foregoing method may be implemented based on an interaction voice signal captured by a microphone array, for example, may be implemented in a vehicle. Microphones of different channels in the microphone array may be disposed at different positions in the vehicle. For example, microphones may be separately disposed on a driver side, a front passenger side, a left side of a rear-row seat, and a right side of the rear-row seat, to capture interaction voice signals, so that an in-vehicle terminal device in the vehicle processes the interaction voice signals captured by the microphones at different positions.

For another example, the foregoing method may be implemented in a home scenario. Microphones of different channels in a microphone array may be disposed at different positions in a house. For example, microphones may be separately disposed in a porch, a living room, a bedroom, and a kitchen to capture interaction voice signals, so that a terminal device processes the interaction voice signals captured by the microphones at different positions.

For another example, the foregoing method may be implemented in an application scenario of an intelligent terminal. Microphones of different channels in a microphone array may be disposed at different positions of the intelligent terminal, to capture interaction voice signals. In this way, a processor of the intelligent terminal device may process the captured interaction voice signals.

For another example, the foregoing method may be further implemented in an office scenario, a sales scenario, a bank scenario, or the like. Details are not described.

In an actual application, if the method is implemented based on an interaction voice signal captured by a microphone array, after a voice wakeup module determines that the interaction voice signal includes a wakeup voice signal, and determines a voice capturing object (for example, from a microphone channel in the microphone array or from a sound capturing area) that the wakeup voice signal is from, a voice interaction module obtains, from a voice signal subsequently captured by the microphone array in real time, a voice signal sent by the voice capturing object, to perform enhancement and interaction instruction recognition, and implements voice wakeup and a subsequent voice interaction operation of a device or system.

The foregoing method may also be implemented based on an interaction voice signal captured by a single-channel microphone. For example, an intelligent terminal device may have only a single-channel microphone, and may capture an interaction voice signal of a user based on the single-channel microphone. A processor of the intelligent terminal device may process the interaction voice signal captured by the single-channel microphone. Alternatively, in a microphone array that has a plurality of channels and that is deployed in a vehicle, a microphone of only one channel is in an enabled state, and an in-vehicle terminal may process an interaction voice signal captured by the microphone channel that is in the enabled state.

The wakeup voice signal in embodiments of this application may be one or more preset voice signals used for wakeup (for example, waking up a device or a system), and one wakeup voice signal may include one or more of the following voice signals: a digital voice signal, a Chinese voice signal, a foreign language voice signal, a letter voice signal, and the like.

There may be a plurality of voice capturing objects in embodiments of this application. According to the interaction voice signal processing method or the neural network model-based interaction voice signal processing method in embodiments of this application, it may be determined from the plurality of voice capturing objects that a wakeup voice signal in an interaction voice signal is from one or more first voice capturing objects in the plurality of voice capturing objects. The plurality of voice capturing objects may be distinguished based on different spatial positions. The following specifically describes three examples.

In a first example, the interaction voice signal may be captured by a microphone array. The microphone array may include a plurality of microphone channels, and different microphone channels have different spatial positions. Therefore, different microphone channels may capture sounds at different spatial positions, and different microphone channels are different voice capturing objects. It should be noted that different microphone channels may capture sounds at different spatial positions, but it does not mean that different microphone channels cannot capture a sound from a same sound source. For example, an interaction voice signal is captured by a microphone array disposed in a vehicle. The microphone array includes four microphone channels, which are separately disposed on a driver side, a front passenger side, a left side of a rear-row seat, and a right side of the rear-row seat of the vehicle. The microphone on the driver side is mainly configured to capture a sound of a user at a driver seat, the microphone on the front passenger side is mainly configured to capture a sound of a user at the front passenger seat. However, when the user at the driver seat makes a sound, both the microphone on the driver side and the microphone on the front passenger side may receive the sound.

In a second example, different voice capturing objects may be different sound capturing areas, and the sound capturing area is a part of a spatial area around a capturing device for an interaction voice signal. For example, the interaction voice signal is captured by the microphone array disposed in the vehicle. The microphone array includes four microphone channels, which are separately disposed on the driver side, the front passenger side, the left side of the rear-row seat, and the right side of the rear-row seat of the vehicle. Internal space of the vehicle is divided into four spatial areas respectively corresponding to the four microphone channels. A first spatial area includes space right above the driver seat and space near the driver seat, a second spatial area includes space right above the front passenger seat and space near the front passenger seat, a third spatial area includes space right above the left side of the rear-row seat and space near the left side of the rear-row seat, and a fourth spatial area includes space right above the right side of the rear-row seat and space near the right side of the rear-row seat. The foregoing four spatial areas are four different sound capturing areas.

In a third example, the voice capturing object may alternatively be a character having a kind of timbre in a part of a spatial area around a capturing device for an interaction voice signal, for example, child timbre, adult timbre, adult male timbre, or adult female timbre, or may be a kind of timbre corresponding to a segment of audio that is recorded in advance. The different voice capturing objects may be different timbre characters in a same sound capturing area, or a same timbre character in different sound capturing areas, or different timbre characters in different sound capturing areas. For example, the internal space of the vehicle is divided into the four spatial areas in the foregoing example. In this case, in an example, a child timbre character in the first spatial area, an adult timbre character in the first spatial area, a child timbre character in the second spatial area, an adult timbre character in the second spatial area, a child timbre character in the third spatial area, an adult timbre character in the third spatial area, a child timbre character in the fourth spatial area, and an adult timbre character in the fourth spatial area are eight different voice capturing objects. For example, in an application scenario, if it is determined that the wakeup voice signal in the interaction voice signal is from the child timbre character in the first spatial area, it indicates that a vehicle system may be woken up by a child on the driver seat of the vehicle. If the vehicle system continues to be woken up according to a normal wakeup procedure or some driving functions of the vehicle are enabled after the vehicle system is woken up, a security risk exists. Therefore, when it is determined that the wakeup voice signal in the interaction voice signal is from the child timbre character in the first spatial area, a voice operation instruction may be sent to trigger the vehicle to enter an operation mode for a child. For example, in this mode, a vehicle operating system is not woken up, or a specified button or key of the vehicle is locked, or some voice interaction processes for the child are started, for example, playing a child song, telling a story, or making a call to a vehicle owner.

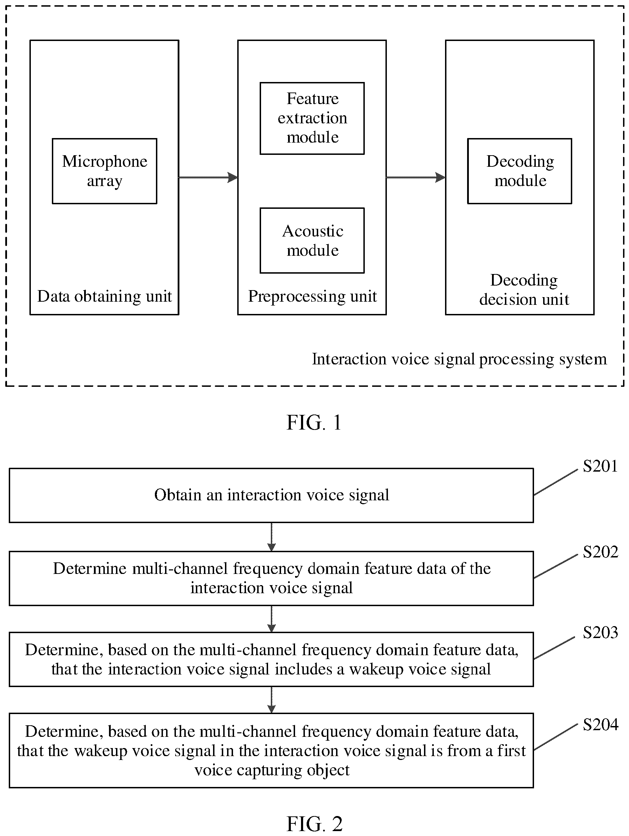

The following describes a method, a related device, and a related system that are provided in embodiments of this application. First, an interaction voice signal processing system is described. The interaction voice signal processing method provided in embodiments of this application may be implemented based on the system. FIG. 1 is a system diagram of an interaction voice signal processing system according to an embodiment of this application. As shown in the figure, the system may include a data obtaining unit, a preprocessing unit, and a decoding decision unit.

The data obtaining unit may include a microphone array, configured to pick up a sound in an environment, and output a corresponding interaction voice signal. The preprocessing unit may include a feature extraction module and an acoustic module. The feature extraction module may be configured to extract multi-channel frequency domain feature data of the interaction voice signal, and the acoustic module is configured to determine a prediction parameter (including a first prediction parameter and a second prediction parameter) based on the multi-channel frequency domain feature data. A decoding module is configured to determine, based on the first prediction parameter, whether the interaction voice signal includes a wakeup voice signal, and determine, based on the second prediction parameter, a first voice capturing object that the wakeup voice signal in the interaction voice signal is from.

The units in the system may be units in a same apparatus, or may be units in different apparatuses. The interaction voice signal processing method provided in this application may be implemented based on the foregoing system. The method may be performed by an interaction voice signal processing apparatus. In an implementation, the interaction voice signal processing apparatus may include the data obtaining unit, the preprocessing unit, and the decoding decision unit. In another implementation, the interaction voice signal processing apparatus may include the preprocessing unit and the decoding decision unit. The data obtaining unit is a unit in another apparatus, and may output the interaction voice signal to the preprocessing unit in the interaction voice signal processing apparatus. Further, in an example, in correspondence with the description of the foregoing scenario, the interaction voice signal processing apparatus may be a part of an in-vehicle terminal, a part of an intelligent terminal, or the like.

The following describes an interaction voice signal processing method provided in embodiments of this application. According to the interaction voice signal processing method, that an interaction voice signal includes a wakeup voice signal and a source of the wakeup voice signal in the interaction voice signal can be determined with a low delay and low consumption. FIG. 2 is a schematic flowchart of an interaction voice signal processing method according to an embodiment of this application. As shown in FIG. 2, the method includes steps S201 to S204.

S201: Obtain an interaction voice signal.

The interaction voice signal includes at least one single-channel voice signal, and different single-channel voice signals belong to different voice channels. For example, different single-channel voice signals are captured by different microphone channels. The interaction voice signal may include a single-channel voice signal. The single-channel voice signal may be captured by a separate microphone, or may be captured by a microphone channel in a microphone array, and another microphone channel in the microphone array may be in a disabled state. The interaction voice signal may alternatively include a plurality of single-channel voice signals, and the plurality of single-channel voice signals may be separately captured by different microphone channels in the microphone array. Further, if the interaction voice signal includes a plurality of single-channel voice signals, the plurality of single-channel voice signals may be captured in a same time period. An interaction voice signal processing apparatus obtains the interaction voice signal captured by the microphone or the microphone array, and then performs processing.

S202: Determine multi-channel frequency domain feature data of the interaction voice signal.

The multi-channel frequency domain feature data indicates frequency domain features of all single-channel voice signals in the interaction voice signal. Further, the multi-channel frequency domain feature data of the interaction voice signal includes frequency domain feature data of each single-channel voice signal in the interaction voice signal, which separately indicates a frequency domain feature of each single-channel voice signal in the interaction voice signal.

Different multi-channel frequency domain feature data may be obtained for different interaction voice signals. For example, the multi-channel frequency domain feature data is related to content corresponding to the interaction voice signal, volume, timbre, or tone of the interaction voice signal, or play duration corresponding to the interaction voice signal.

In some implementations, the multi-channel frequency domain feature data is further related to deployment of different microphones in the microphone array, an enabled state of a microphone channel, parameters of different microphones in the microphone array, and the like. For example, an interaction voice signal is captured by different microphone channels in a microphone array in a vehicle. For a same vehicle, if microphone channels in the microphone array are deployed in different manners, even if a same sound source emits a same sound at a same position, determined multi-channel frequency domain feature data are different. In actual application, generally, deployment manners of internal microphone arrays of vehicles of a same model are the same. Therefore, it may also be understood that the multi-channel frequency domain feature data is related to a model of the vehicle.

For another example, in a same vehicle, if a same sound source emits a same sound at a same position, multi-channel frequency domain feature data obtained when all microphone channels in the microphone array are in an enabled state is different from multi-channel frequency domain feature data obtained when some microphone channels in the microphone array are in a disabled state. For example, in the multi-channel frequency domain feature data, frequency domain feature data of single-channel voice signals corresponding to the foregoing microphone channels that are in the disabled state may be null.

For another example, in a same vehicle with a same microphone deployment solution, for a same deployment position, if two microphones with different parameters (for example, one is an omnidirectional microphone and the other is a directional microphone) are deployed at the deployment position, even if a same sound source emits a same sound at a same position of the vehicle, obtained multi-channel frequency domain feature data is different.

In a process of determining the multi-channel frequency domain feature data, first, the frequency domain feature data of the interaction voice signal may be extracted by a filter bank, and then the multi-channel frequency domain feature data of the interaction voice signal may be extracted by using a neural network model (for example, an attention mechanism-based neural network model).

Specifically, framing processing may be separately performed on each single-channel voice signal in the interaction voice signal to obtain a plurality of interaction voice signal frames. For example, for a single-channel voice signal whose duration is 305 ms, a window length of a frame in the framing processing is 25 ms, and a window shift is 10 ms. After the framing processing is performed, 29 interaction voice signal frames may be obtained. Then, signal frame frequency domain feature data of each interaction voice signal frame is obtained by using the filter bank, and the multi-channel frequency domain feature data is extracted based on a plurality of pieces of signal frame frequency domain feature data and the neural network model.

Further, before the framing processing, pre-emphasis processing may be performed on the single-channel voice signal. This may improve a signal-to-noise ratio of the single-channel voice signal in a high frequency part. The interaction voice signal frame obtained after the framing processing may be windowed, to improve spectrum quality. Then, short-term Fourier transform is performed on the windowed interaction voice signal frame, and the transformed interaction voice signal frame is input into a Mel filter bank, to obtain the signal frame frequency domain feature data of the interaction voice signal frames. For example, the signal frame frequency domain feature data may be FBANK (Filter Bank, filter bank) feature data. Further, in another manner, discrete cosine transform may be performed on the feature data output by the Mel filter bank, to obtain the signal frame frequency domain feature data of the interaction voice signal frames after the transform. For example, the signal frame frequency domain feature data may be MFCC (Mel-Frequency Cepstral Coefficient, Mel-Frequency Cepstral Coefficient) feature data.

After the signal frame frequency domain feature data of the interaction voice signal frames is determined, single-channel frequency domain feature data of the single-channel voice signal may be obtained through combination. Then, the frequency domain feature data of the interaction voice signal may be obtained through combination based on the single-channel frequency domain feature data of the single-channel voice signals, and the frequency domain feature data of the interaction voice signal is input into a neural network model (for example, a conformer network model) to output the multi-channel frequency domain feature data of the interaction voice signal.

In a specific implementation of determining the frequency domain feature data of the interaction voice signal, in one manner, for interaction voice signal frames in a same single-channel voice signal, signal frame frequency domain feature data of the interaction voice signal frames may be sequentially arranged and combined based on capturing time of the interaction voice signal frames, to obtain single-channel frequency domain feature data of the single-channel voice signal. The single-channel frequency domain feature data of the single-channel voice signals may be arranged in a specified arrangement manner. For example, the frequency domain feature data of the interaction voice signal may be a matrix, and different single-channel frequency domain feature data is located in different rows in the matrix, to obtain the frequency domain feature data of the interaction voice signal.

In another manner, the signal frame frequency domain feature data of the interaction voice signal frames may be spliced with signal frame frequency domain feature data of semantic-related frames, and spliced signal frame frequency domain feature data of interaction voice signal frames in a same single-channel voice signal is sequentially arranged and combined based on capturing time of the interaction voice signal frames, to obtain the single-channel frequency domain feature data of the single-channel voice signal. The single-channel frequency domain feature data of the single-channel voice signals may be arranged in a specified arrangement manner, to obtain the frequency domain feature data of the interaction voice signal.

Each interaction voice signal frame has a semantic-related frame of the interaction voice signal frame, and the semantic-related frame of the interaction voice signal frame may be one or more voice signal frames that belong to a same single-channel voice signal as the interaction voice signal frame and that are adjacent to the interaction voice signal frame in time domain. For example, the semantic-related frame of the interaction voice signal frame may be M previous interaction voice signal frames (M is a positive integer) and/or N subsequent interaction voice signal frames (N is a positive integer) that are adjacent to the interaction voice signal frame in time domain in a same single-channel voice signal.

The signal frame frequency domain feature data of the interaction voice signal frames is spliced with the signal frame frequency domain feature data of the semantic-related frames, so that the interaction voice signal frame can be fused with more context information, and the multi-channel frequency domain feature data obtained based on the spliced signal frame frequency domain feature data is more accurate.

Both the frequency domain feature data of the interaction voice signal and the multi-channel frequency domain feature data of the interaction voice signal are frequency domain features of each single-channel voice signal in the interaction voice signal. However, after the frequency domain feature data of the interaction voice signal is input into the neural network model, the neural network model may extract more hidden and abstract frequency domain features of the interaction voice signal, so that features in the multi-channel frequency domain feature data of the interaction voice signal are generally more comprehensive than features in the frequency domain feature data of the interaction voice signal, and have a higher feature dimension. For example, there may be 40 feature dimensions in the frequency domain feature data of the interaction voice signal, and there may be 300 feature dimensions in the multi-channel frequency domain feature data of the interaction voice signal.

S203: Determine, based on the multi-channel frequency domain feature data, that the interaction voice signal includes a wakeup voice signal.

The multi-channel frequency domain feature data includes frequency domain features of all single-channel voice signals in the interaction voice signal. It may be determined, by analyzing the multi-channel frequency domain feature data, that the interaction voice signal includes the wakeup voice signal.

Specifically, a first prediction parameter may be determined based on the multi-channel frequency domain feature data of the interaction voice signal, where the first prediction parameter may indicate a probability that the interaction voice signal includes the wakeup voice signal. When the first prediction parameter meets a first parameter condition, it is further determined that the interaction voice signal includes the wakeup voice signal. Optionally, when the first prediction parameter does not meet the first parameter condition, it may be determined that the interaction voice signal does not include the wakeup voice signal.

For example, the first prediction parameter may include a first prediction probability, the first prediction probability is a probability that the interaction voice signal includes the wakeup voice signal, and the first parameter condition is that the first prediction probability is greater than a first threshold. When the condition is met, it may be determined that the interaction voice signal includes the wakeup voice signal; or when the condition is not met, it may be determined that the interaction voice signal does not include the wakeup voice signal.

Further, there may be a plurality of types of wakeup voice signals preset in an interaction voice signal processing apparatus, and there may be a plurality of first prediction probabilities. Different first prediction probabilities indicate probabilities that the interaction voice signal includes different wakeup voice signals.

Further, the first prediction parameter may be obtained based on a neural network model.

Optionally, the wakeup voice signal includes at least one type of wakeup audio unit, and the wakeup audio unit may be one or more of the following units: a character unit, a word unit, a letter unit, a phoneme unit, and a syllable unit. For example, the wakeup voice signal is a voice signal corresponding to "ni hao, Xiaoming", and the wakeup audio units may include a plurality of character units (to be specific, include a plurality of Chinese character units), that is, the wakeup voice signal includes a voice signal corresponding to a character "ni", a voice signal corresponding to a character "hao", a voice signal corresponding to a character "xiao", and a voice signal corresponding to a character "ming".

The wakeup audio units are divided based on pronunciations corresponding to the wakeup voice signals. A same wakeup voice signal may have a plurality of wakeup audio unit division manners, and may have a coarse-grained division manner or a fine-grained division manner. For example, in the foregoing example of "ni hao, Xiaoming", the wakeup audio units may alternatively be a plurality of syllable units, including voice signals corresponding to syllables "n", "i", "h", "ao", "x", "m", and "ing".

The interaction voice signal may be sequentially divided into a plurality of voice segment signals based on capturing time. For example, play duration corresponding to the interaction voice signal is 3s, and the interaction voice signal includes 100 voice segment signals that are arranged according to a capturing implementation sequence and whose play duration is 3 ms. The first prediction parameter may indicate probabilities that the voice segment signal includes the wakeup audio units, so that a probability that the interaction voice signal includes the interaction voice signal may be determined based on the probabilities that the voice segment signal includes the wakeup audio units, and whether the interaction voice signal includes the interaction voice signal may be determined.

S204: Determine, based on the multi-channel frequency domain feature data, that the wakeup voice signal in the interaction voice signal is from a first voice capturing object.

The multi-channel frequency domain feature data includes the frequency domain features of all single-channel voice signals in the interaction voice signal. It may be determined, by analyzing the multi-channel frequency domain feature data, that the wakeup voice signal included in the interaction voice signal is from the first voice capturing object.

Further, the first voice capturing object may be one of a plurality of voice capturing objects. The first voice capturing object may include but is not limited to any one of the following: a first microphone channel, a first sound capturing area, or a target timbre character in a second sound capturing area.

Specifically, a second prediction parameter may be determined based on the multi-channel frequency domain feature data of the interaction voice signal, where the second prediction parameter may indicate a probability that the wakeup voice signal in the interaction voice signal is from the first voice capturing object. When the second prediction parameter meets a second parameter condition, it is determined that the wakeup voice signal included in the interaction voice signal is from the first voice capturing object.

For example, the second prediction parameter may include a second prediction probability, the second prediction probability may be a probability that the wakeup voice signal in the interaction voice signal is from the first voice capturing object, and the second condition parameter is that the second prediction probability is greater than a second threshold. When the condition is met, it may be determined that the wakeup voice signal included in the interaction voice signal is from the first voice capturing object.

Further, the second prediction parameter may be obtained based on the neural network model, and the neural network model may output the first prediction parameter and the second prediction parameter.

If the first voice capturing object is the target timbre character in the second sound capturing area, the first voice capturing object may be directly output by the neural network model, or may be a second sound capturing area output by the neural network model. Then, target timbre of the wakeup voice signal in the interaction voice signal is obtained through analysis, to determine that the wakeup voice signal in the interaction voice signal is from the target timbre character in the second sound capturing area.

In an implementation, step S203 and step S204 may be performed in parallel, that is, in a process of determining that the interaction voice signal includes the wakeup voice signal, a source of the wakeup voice signal in the interaction voice signal may be determined, so that a waiting delay of a user can be shortened.

In another implementation, step S204 may be performed after step S203, that is, after it is determined that the interaction voice signal includes the wakeup voice signal, the interaction voice signal processing apparatus may be triggered to determine the source of the wakeup voice signal. Further, if it is determined that the interaction voice signal does not include the wakeup voice signal, the source of the wakeup voice signal may not be determined, thereby saving processing resources.

In the interaction voice signal processing method in this embodiment, for the multi-channel frequency domain feature data, both feature data used for the process of determining that the interaction voice includes the wakeup signal and feature data used for the process of determining the source of the wakeup voice signal in the interaction voice signal are the multi-channel frequency domain feature data. Therefore, an action of determining the multi-channel frequency domain feature data is shared by the foregoing two processes, to save a part of processing time and processing resources. In addition, the foregoing two processes may be processed in parallel, to further shorten a waiting delay after the user sends the wakeup voice signal, and a plurality of single-channel voice signals in the interaction voice signal may also be processed at the same time, to further reduce consumption and save processing resources.

The following describes a neural network model-based interaction voice signal processing method according to an embodiment of this application. The method may be implemented in a neural network model-based interaction voice signal processing apparatus. In correspondence with the description of the foregoing application scenario, the apparatus may be a part of an in-vehicle terminal or a part of an intelligent terminal. According to the method, that the interaction voice includes the wakeup voice signal and the source of the wakeup voice signal in the interaction voice signal can be determined with a low delay and low consumption based on a neural network model.

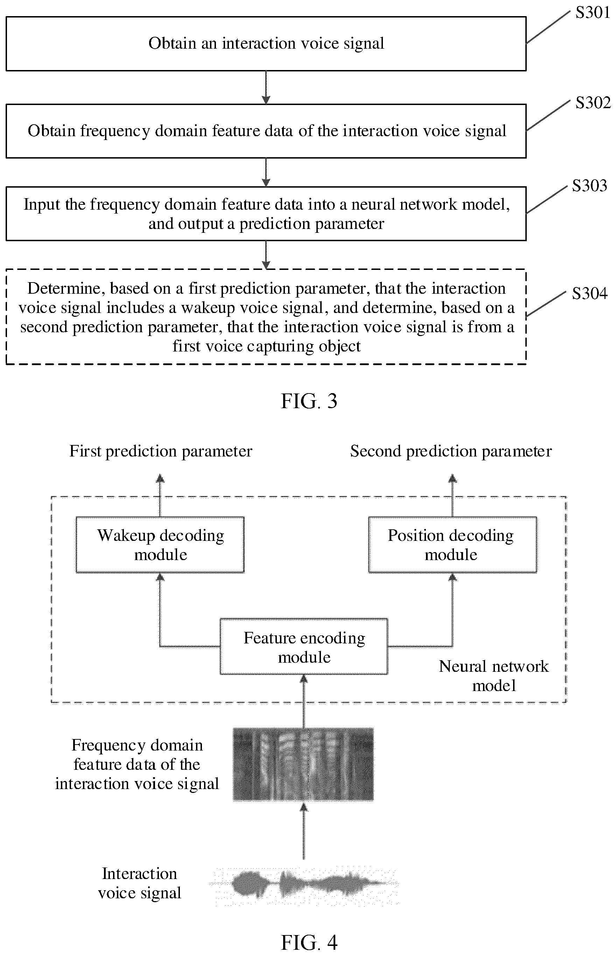

FIG. 3 is a neural network model-based interaction voice signal processing method according to an embodiment of this application. The method includes the following steps:

S301: Obtain an interaction voice signal.

The interaction voice signal may include a single-channel voice signal. The single-channel voice signal may be captured by a separate microphone, for example, may be captured by a microphone channel in a microphone array, and another microphone channel in the microphone array may be in a disabled state. The interaction voice signal may alternatively include a plurality of single-channel voice signals, and the plurality of single-channel voice signals may be separately captured by different microphone channels in the microphone array. Further, if the interaction voice signal includes a plurality of single-channel voice signals, the plurality of single-channel voice signals may be captured in a same time period.

S302: Obtain frequency domain feature data of the interaction voice signal.

The frequency domain feature data of the interaction voice signal may be obtained through extraction by using a filter bank. Specifically, framing processing may be first performed on the interaction voice signal to obtain a plurality of interaction voice signal frames, signal frame frequency domain feature data of the interaction voice signal frames is obtained by using the filter bank, and the frequency domain feature data of the interaction voice signal frame is determined based on the signal frame frequency domain feature data. Further, before the framing processing, pre-emphasis processing may be performed on the interaction voice signal, and after the framing processing, windowing and short-time Fourier transform may be performed, and input the transformed interaction voice signal to a Mel filter bank to obtain the signal frame frequency domain feature data (for example, FBANK feature data). Alternatively, after windowing and short-time Fourier transform are performed on the interaction voice signal, and the transformed interaction voice signal is input to the Mel filter bank, discrete cosine transform is performed to obtain the signal frame frequency domain feature data (for example, an MFCC feature). After the signal frame frequency domain feature data of the interaction voice signal frames is determined, the frequency domain feature data of the interaction voice signal may be obtained through combination.

If the interaction voice signal includes at least one single-channel voice signal, the frequency domain feature data of the interaction voice signal includes at least one piece of single-channel frequency domain feature data, and the single-channel frequency domain feature data indicates a frequency domain feature of the single-channel voice signal.

For a specific manner of determining the frequency domain feature data of the interaction voice signal, refer to the specific implementation of determining the frequency domain feature data of the interaction voice signal described in an embodiment corresponding to FIG. 2. Details are not described.

S303: Input the frequency domain feature data into a neural network model, and output a prediction parameter.

The prediction parameter includes a first prediction parameter and a second prediction parameter, the first prediction parameter is used to determine that the interaction voice signal includes a wakeup voice signal, and the second prediction parameter is used to determine that the wakeup voice signal in the interaction voice signal is from a first voice capturing object.

In an implementation, the neural network model may include a feature encoding module, a wakeup decoding module, and a position decoding module. Refer to FIG. 4. FIG. 4 is a diagram of a neural network model according to an embodiment of this application. As shown in FIG. 4, the neural network model may receive data through a feature encoding module, and separately output data through a wakeup decoding module and a position decoding module. After receiving frequency domain feature data of an interaction voice signal, the feature encoding module may be configured to extract multi-channel frequency domain feature data of the interaction voice signal, and separately transmit the multi-channel frequency domain feature data to the wakeup decoding module and the position decoding module. The wakeup decoding module is configured to output a first prediction parameter based on the multi-channel frequency domain feature data, and the position decoding module is configured to output a second prediction parameter based on the multi-channel frequency domain feature data.

In a specific implementation, the feature encoding module may store the determined multi-channel frequency domain feature data in a buffer, and a neural network model-based interaction voice signal processing apparatus may subsequently separately transmit the multi-channel frequency domain feature data in the buffer to the wakeup decoding module and the position decoding module.

The feature encoding module may be an encoder in a conformer (conformer) structure. For example, the encoder may include four units: a feed-forward unit, a multi-head self-attention unit, a convolution unit, and another feed-forward unit, to implement feature extraction based on an attention mechanism.

The first prediction parameter output by the wakeup decoding module may be a prediction score, a prediction probability, or the like. In an implementation, the wakeup decoding module may include two fully connected layers (each layer may have 256 nodes) and one softmax (an activation function) output layer. The first prediction parameter output by the softmax output layer of the wakeup decoding module may include a first prediction probability, and the first prediction probability is used to determine a probability that the interaction voice signal includes the wakeup voice signal.

In the wakeup decoding module, in a specific implementation, the softmax output layer of the wakeup decoding module may include P+1 nodes (P is a positive integer), where each of P nodes is configured to output a first prediction probability, and a remaining node of the P+1 nodes is configured to output a prediction probability indicating that the interaction voice signal does not include the wakeup voice signal. In the neural network model-based interaction voice signal processing apparatus, if there is only one preset wakeup voice signal used for wakeup, P is 1; and if there are a plurality of preset wakeup voice signals used for wakeup, P is a positive integer greater than 1.

For example, there are two types of wakeup voice signals preset in the interaction voice signal processing apparatus: a voice signal corresponding to "ni hao, Xiaoming" and a voice signal corresponding to "Hello Xiaoming". In this case, the softmax output layer of the wakeup decoding module may include three nodes, which are separately configured to output a first prediction probability indicating that the interaction voice signal includes the voice signal corresponding to "ni hao, Xiaoming", a first prediction probability indicating that the interaction voice signal includes the voice signal corresponding to "Hello Xiaoming", and a prediction probability indicating that the interaction voice signal does not include the foregoing two types of wakeup voice signals.

Further, in addition to the foregoing P+1 nodes, the softmax output layer of the wakeup decoding module may further include other Q nodes (Q is a positive integer), and each of the Q nodes is configured to output a prediction probability indicating that the interaction voice signal includes a specified voice signal. For example, in the neural network model-based interaction voice signal processing apparatus, in addition to a specific quantity of preset wakeup voice signals used for wakeup, a specific quantity of other specified voice signals may be preset. For example, the specified voice signal may be a candidate wakeup voice signal, and the candidate wakeup voice signal may not have a wakeup function currently, and may be subsequently set by a user as a wakeup voice signal. Subsequently, after the candidate wakeup voice signal is set as the wakeup voice signal and has the wakeup function, the corresponding first prediction probability may be further output through the neural network model. In this case, a remaining node of the P+1 nodes is configured to output a prediction probability indicating that the interaction voice signal does not include the wakeup voice signal or any other specified voice signal.

For example, there are two types of wakeup voice signals preset in the interaction voice signal processing apparatus: the voice signal corresponding to "ni hao, Xiaoming" and the voice signal corresponding to "Hello Xiaoming". There is one type of candidate wakeup voice signal: a voice signal corresponding to "ni hao ya, Xiaoming". In this case, the softmax output layer of the wakeup decoding module may include four nodes, which are separately configured to output the first prediction probability indicating that the interaction voice signal includes the voice signal corresponding to "ni hao, Xiaoming", the first prediction probability indicating that the interaction voice signal includes the voice signal corresponding to "Hello Xiaoming", a prediction probability indicating that the interaction voice signal includes a voice signal corresponding to "ni hao ya, Xiaoming", and a prediction probability indicating that the interaction voice signal does not include the foregoing three wakeup voice signals.

In the wakeup decoding module, in another specific implementation, the wakeup voice signal includes at least one type of wakeup audio unit. The wakeup audio unit may be divided based on a pronunciation corresponding to the wakeup voice signal. The wakeup audio unit may be one or more of the following units: a character unit, a word unit, a letter unit, a phoneme unit, a syllable unit, and the like. The interaction voice signal may be sequentially divided into a plurality of voice segment signals based on capturing time. The first prediction probability indicates a probability that the voice segment signal includes the wakeup audio unit.

The softmax output layer of the wakeup decoding module may have I+2 nodes, where each of I nodes is configured to output a first prediction probability that the voice segment signal includes one type of wakeup audio unit, and may sequentially output, based on capturing time of the voice segment signals, first prediction probabilities that the voice segment signals include the wakeup audio unit. In the I+2 nodes, in addition to the foregoing I nodes, one of remaining two nodes is configured to output a prediction probability indicating that the voice segment signal does not include any type of wakeup audio unit, and the other node of the remaining two nodes is configured to output a prediction probability indicating that the voice segment signal is a logical blank symbol. The logical blank symbol is different from a symbol like a space or a space character in a document, is a logical separator, and is used to resolve a problem of alignment between a prediction result and a voice signal.

For example, there are two types of wakeup voice signals preset in the interaction voice signal processing apparatus: the voice signal corresponding to "ni hao, Xiaoming" and the voice signal corresponding to "Hello Xiaoming". The wakeup audio units may include voice signals corresponding to syllables "n", "i", "h", "ao", "x", "m", "ing", "hel", and "lo". In this case, the softmax output layer of the wakeup decoding module may include 11 nodes, and each of nine nodes is configured to output a first prediction probability that the voice segment signal includes a voice signal corresponding to one of the foregoing syllables. One of remaining two nodes is configured to output a prediction probability indicating that the voice segment signal does not include the voice signal corresponding to any syllable, and the other node of the remaining two nodes is configured to output a prediction probability indicating that the voice segment signal is a logical blank symbol.

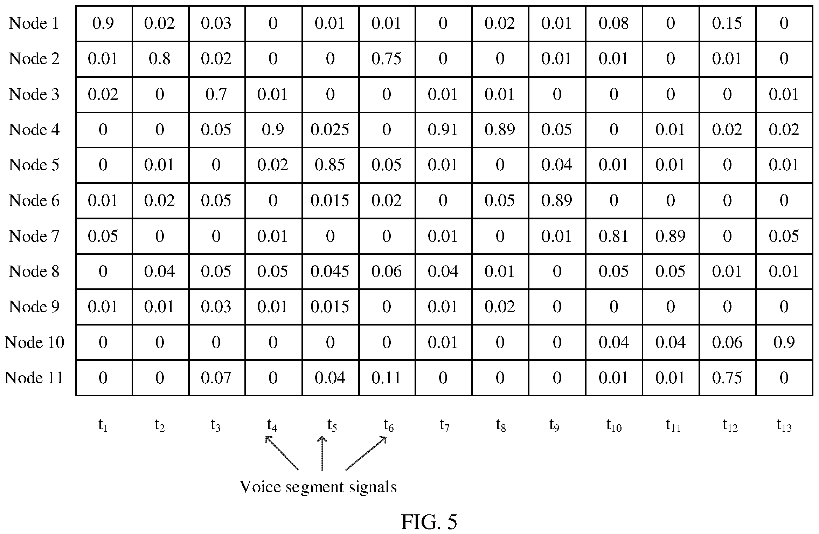

For details, refer to a table in FIG. 5. FIG. 5 is a diagram of data output from a softmax output layer of a wakeup decoding module according to an embodiment of this application. In an example corresponding to FIG. 5, it is assumed that an interaction voice signal may sequentially include 13 voice segment signals t₁ to t₁₃ based on capturing time of the voice signals. A node 1 to a node 9 are respectively configured to output a prediction probability indicating that the voice segment signal includes a voice signal corresponding to "n", a prediction probability indicating that the voice segment signal includes a voice signal corresponding to "i", a prediction probability indicating that the voice segment signal includes a voice signal corresponding to "h", a prediction probability indicating that the voice segment signal includes a voice signal corresponding to "ao", a prediction probability indicating that the voice segment signal includes a voice signal corresponding to "x", a prediction probability indicating that the voice segment signal includes a voice signal corresponding to "m", a prediction probability indicating that the voice segment signal includes a voice signal corresponding to "ing", a prediction probability indicating that the voice segment signal includes a voice signal corresponding to "hel", and a prediction probability indicating that the voice segment signal includes a voice signal corresponding to "lo". A node 10 is configured to output a first prediction probability indicating that the voice segment signal does not include the voice signal corresponding to any one of "n", "i", "h", "ao", "x", "m", "ing", "hel", and "lo". A node 11 is configured to output a prediction probability indicating that the voice segment signal is a logical blank symbol. The node 1 to the node 11 sequentially output prediction probabilities for the voice segment signals based on capturing time of the voice segment signals. As shown in the table in FIG. 5, the node 1 to the node 11 separately output a prediction probability for the voice segment signal t₁, and then output a prediction probability for the voice segment signal t₂, and by analogy, prediction probabilities for voice segment signals t₃ to t₁₃ are sequentially obtained.

Further, in addition to the I+2 nodes, the softmax output layer of the wakeup decoding module may further include other J nodes (J is a positive integer), where the J nodes are configured to output prediction probabilities that an voice segment signal in the interaction voice signal includes another specified audio unit. For example, in a neural network model-based interaction voice signal processing apparatus, in addition to a specific quantity of preset wakeup voice signals used for wakeup, a specific quantity of other specified voice signals may be preset, for example, the candidate wakeup voice signals described above. The candidate wakeup voice signal includes J types of other audio units (it should be noted that if several types of audio units in the candidate wakeup voice signal are the same as some wakeup audio units, these audio units are referred to as wakeup audio units, and are not referred to as other audio units). Each of the J nodes at the softmax output layer is configured to output a prediction probability indicating that the voice segment signal of the interaction voice signal includes another type of audio unit. In this case, in the I+2 nodes, in addition to I nodes, one remaining node is configured to output a prediction probability indicating that the voice segment signal does not include any wakeup audio unit or any other type of audio unit, and the other remaining node is configured to output a prediction probability indicating that the voice segment signal is a logical blank symbol. For another example, the other specified audio units may include all audio units other than the wakeup audio units in the wakeup voice signal, J is a quantity of all audio units other than the wakeup audio units in the wakeup voice signal, and one of the J nodes is configured to output a prediction probability that the voice signal in the interaction voice signal includes another specified audio unit.

For example, two types of wakeup voice signals preset in the interaction voice signal processing apparatus are separately a voice signal corresponding to "ni hao, Xiaoming" and a voice signal corresponding to "Hello Xiaoming". The candidate wakeup voice signal includes "ni hao ya, Xiaoming", and the wakeup audio units may include voice signals corresponding to syllables "n", "i", "h", "ao", "x", "m", "ing", "hel", and "lo". The other audio units include voice signals corresponding to syllables "y" and "a". In this case, the softmax output layer of the wakeup decoding module may include 13 nodes, where each of nine nodes is configured to output a first prediction probability that the voice segment signal includes the wakeup audio unit, one of the remaining four nodes is configured to output a prediction probability indicating that the voice segment signal does not include the voice signal corresponding to any one of the foregoing syllables, and another node of the remaining four nodes is configured to output a prediction probability indicating that the voice segment signal is a logical blank symbol. The other two nodes of the remaining four nodes are separately configured to output a prediction probability indicating that the voice segment signal includes the voice signal corresponding to the syllable "y", and output a prediction probability indicating that the voice segment signal includes the voice signal corresponding to the syllable "a".

A second prediction parameter output by the position decoding module may be a prediction score, a prediction probability, or the like. In an implementation, the position decoding module may include two fully connected layers (each layer may have 256 nodes) and one softmax output layer. The second prediction parameter output by the softmax output layer of the position decoding module may include a second prediction probability, and the second prediction probability is used to determine a probability that the wakeup voice signal in the interaction voice signal is from a first voice capturing object.

In a specific implementation, the softmax output layer of the position decoding module may include R+1 nodes (R is a positive integer), and each of R nodes is configured to output one second prediction probability. One second prediction probability indicates a probability that the wakeup voice signal in the interaction voice signal is from one voice capturing object. A remaining node of the R+1 nodes is configured to output a prediction probability indicating that the wakeup voice signal in the interaction voice signal is not from any preset voice capturing object. Through comparison of values of a plurality of second prediction probabilities, one or more first voice capturing objects with a highest probability may be determined from a plurality of voice capturing objects. In a more specific implementation, the first voice capturing object may be a first microphone channel, or may be a first sound capturing area, or may be a target timbre character in a second sound capturing area.

It may be understood that there may be only one first voice capturing object determined based on the second prediction probability, indicating that the wakeup voice signal in the interaction voice signal is from one first voice capturing object. For example, a voice capturing object corresponding to a maximum second prediction probability in second prediction probabilities exceeding a second threshold may be determined as the first voice capturing object. Alternatively, there may be a plurality of voice capturing objects determined based on the second prediction probabilities, indicating that the wakeup voice signal in the interaction voice signal is from a plurality of first voice capturing objects. For example, voice capturing objects corresponding to all second prediction probabilities exceeding the second threshold may be determined as the first voice capturing objects.

It should be noted that, in the neural network model, in an implementation, the wakeup decoding module and the position decoding module may run in parallel. In other words, after the feature encoding module separately transmits the multi-channel frequency domain feature data of the interaction voice signal to the wakeup decoding module and the position decoding module, the wakeup decoding module and the position decoding module may perform prediction in parallel based on the multi-channel frequency domain feature data. It may be understood that, when the wakeup decoding module and the position decoding module run in parallel, the first prediction parameter and the second prediction parameter may be output simultaneously, or may be output sequentially. The two modules run in parallel, so that a waiting delay of a user is shortened.

In another implementation, the position decoding module may start to run when an output result of the wakeup decoding module may determine that the interaction voice signal includes the wakeup voice signal. The two modules run sequentially, and when the interaction voice signal does not include the wakeup voice signal, running of the position decoding module is not triggered, so that processing resources can be saved. Further, if the two modules run sequentially, when the interaction voice signal does not include the wakeup voice signal, the second prediction parameter output by the position decoding module is null.

Optionally, after the prediction parameter output by the neural network model is obtained in step S303, the method may further include step S304: Determine, based on the first prediction parameter, that the interaction voice signal includes the wakeup voice signal, and determine, based on the second prediction parameter, that the interaction voice signal is from the first voice capturing object.

In an implementation of determining, based on the first prediction parameter, that the interaction voice signal includes the wakeup voice signal, it may be determined that the interaction voice signal includes the wakeup voice signal when the first prediction parameter meets a first parameter condition. Optionally, smoothing processing may be performed on the first prediction parameter, and whether the first prediction condition is met is determined based on the first prediction parameter on which smoothing processing is performed. Noise may be filtered out through smoothing processing, thereby improving accuracy of a prediction result.

Further, the first parameter condition may be determining, based on the first prediction parameter, a confidence (for example, the confidence may be represented by a probability) that the interaction voice signal includes the wakeup voice signal, where the confidence is greater than a first threshold.

In a specific implementation, the first prediction parameter includes the first prediction probability that the interaction voice signal includes the wakeup voice signal. When the first prediction probability is large enough, for example, the first prediction probability is greater than the first threshold, that is, the confidence of the interaction voice signal including the wakeup voice signal is high enough, it may be determined accordingly that the interaction voice signal includes the wakeup voice signal.

In another specific implementation, the wakeup voice signal includes a plurality of types of wakeup audio units, the interaction voice signal includes a plurality of voice segment signals sequentially divided based on capturing time, and the first prediction parameter may include a plurality of first prediction probabilities. One first prediction probability indicates a probability that one voice segment signal includes one type of wakeup audio unit. In this case, a probability that the interaction voice signal includes the wakeup voice signal may be determined based on the plurality of first prediction probabilities. When the probability is greater than the first threshold, it is determined that the interaction voice signal includes the wakeup voice signal.

In this implementation, specifically, a prediction result corresponding to each voice segment signal may be sequentially determined based on each first prediction probability and based on sampling time of each voice segment signal. Then, the probability that the interaction voice signal includes the wakeup voice signal is determined based on the prediction result corresponding to each voice segment signal. The prediction result corresponding to the voice segment signal includes a wakeup audio unit or a logical blank symbol, and the prediction result corresponding to the voice segment signal is related to a symbol prediction result corresponding to a voice segment signal that is captured before capturing time of the voice band signal. For example, the probability that the interaction voice signal includes the wakeup voice signal may be determined by using a best path search (best path search) method, a beam search (beam search) method, and the like in CTC (connectionist temporal classification, connectionist temporal classification) prediction. Optionally, before the probability that the interaction voice signal includes the wakeup voice signal is determined, smoothing processing may be performed on the first prediction probability, and the probability that the interaction voice signal includes the wakeup voice signal is determined based on the first prediction probability on which smoothing processing is performed.

Further, first prediction probabilities corresponding to different wakeup audio units may have different weights. The prediction result corresponding to each voice segment signal may be sequentially determined based on each first prediction probability and a weight corresponding to each first prediction probability and based on sampling time of each voice segment signal. Then, a probability that the interaction voice signal includes the wakeup voice signal is determined based on the prediction result corresponding to each voice segment signal. For example, for some Chinese pinyin syllables that are easily to be confused in the wakeup audio unit, weights of first prediction probabilities corresponding to the Chinese pinyin syllables may be low, and weights of first prediction probabilities corresponding to some Chinese pinyin syllables that are distinct may be high. For example, the wakeup voice signal may be a voice signal corresponding to "zaoshanghao". Because pronunciations of a syllable "z" and a syllable "zh" are easy to be confused, some users may send a voice signal "zhaoshanghao" to attempt to perform wakeup. To improve a wakeup success rate of these users, a weight of a first prediction probability corresponding to "zh" may be set to a low value, and weights of first prediction probabilities corresponding to "ao", "sh", "ang", and "h" are set to high values. Further, in the foregoing process of determining the prediction result corresponding to the voice segment signal based on the first prediction probability, the first prediction probability may be multiplied by a weight corresponding to the first prediction probability to perform calculation. First prediction probabilities of different wakeup audio units correspond to different weights, so that different decoding policies can be implemented, prediction can be performed flexibly and practically, and performance of the neural network model is improved.

In a process of determining, based on the second prediction parameter, that the interaction voice signal is from the first voice capturing object, when the second prediction parameter meets a second parameter condition, it may be determined that the wakeup voice signal in the interaction voice signal is from the first voice capturing object.

Further, the second parameter condition may be determining, based on the second prediction parameter, confidence (for example, the confidence may be represented by a probability) that the wakeup voice signal in the interaction voice signal is from the first voice capturing object, where the confidence is greater than the second threshold. For example, the second prediction parameter includes at least one second prediction probability output by the position decoding module for at least one voice capturing object, and each second prediction probability indicates confidence that the wakeup voice signal in the interaction voice signal is from a corresponding voice capturing object. In an implementation, in second prediction probabilities output by the position decoding module, all voice capturing objects corresponding to the second prediction probabilities greater than the second threshold are the first voice capturing objects. In another implementation, in the second prediction probabilities that are output by the position decoding module and that are greater than the second threshold, a voice capturing object corresponding to a maximum second prediction probability is the first voice capturing object. In still another implementation, in the second prediction probabilities output by the position decoding module, if there are a plurality of second prediction probabilities that are greater than the second threshold, voice quality of single-channel voice data of voice capturing objects corresponding to the plurality of second prediction probabilities may be separately determined, where the first voice capturing objects may be voice capturing objects corresponding to one or more pieces of single-channel voice data with best voice quality.

It may be understood that, if different voice capturing objects are different microphone channels, the second prediction probabilities may be separately output for the microphone channels through the position decoding module. If different voice capturing objects are different sound capturing areas, the second prediction probabilities may be separately output for the sound capturing areas through the position decoding module. If the different voice capturing objects are different timbre characters in a same sound capturing area, or a same timbre character in different sound capturing areas, or different timbre characters in different sound capturing areas, in one manner, the second prediction probabilities may be output for the timbre characters in the sound capturing areas through the position decoding module, and in another manner, the second prediction probabilities may be output for the sound capturing areas through the position decoding module. Further, the first voice capturing objects are determined with reference to timbre of the interaction voice signal.

In the neural network model-based interaction voice signal processing method in this embodiment, the first prediction parameter and the second prediction parameter may be output based on a same neural network model, so that whether the interaction voice signal includes the wakeup voice signal and a source of the wakeup voice signal may be determined in an end-to-end manner. This achieves high determining efficiency, shortens a wakeup waiting delay of a user, and determines a plurality of single-channel voice signals at one time for an interaction voice signal including the plurality of single-channel voice signals, thereby reducing consumption of processing resources.

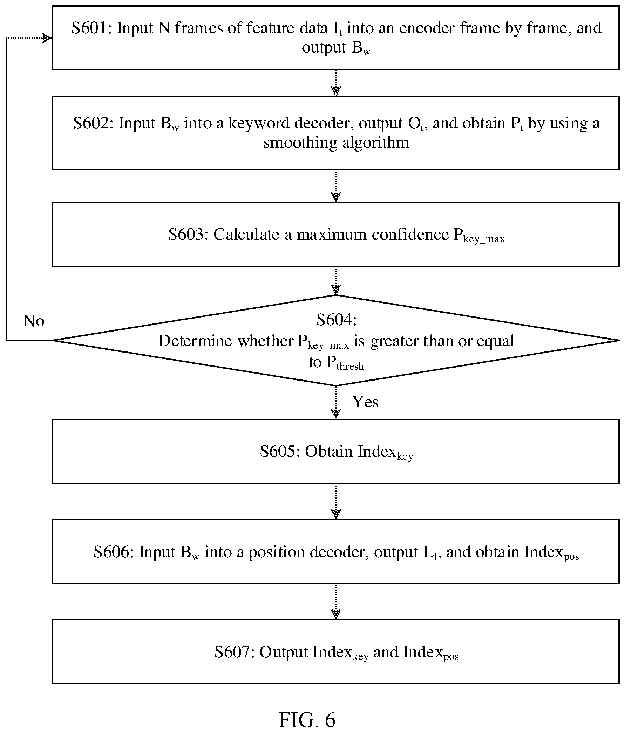

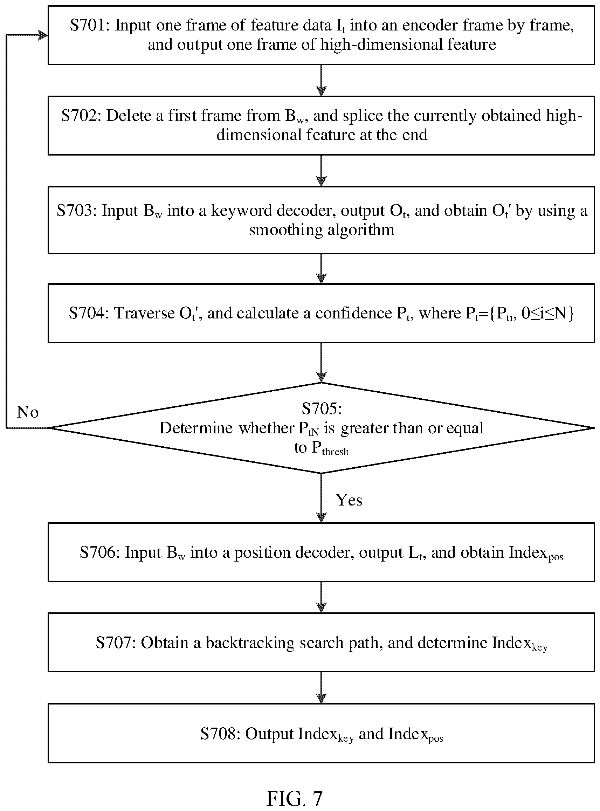

With reference to FIG. 6 and FIG. 7, the following describes specific algorithm procedures of two neural network model-based interaction voice signal processing methods by using examples. FIG. 6 and FIG. 7 are schematic flowcharts of neural network model-based interaction voice signal processing methods according to an embodiment of this application. Procedures in FIG. 6 and FIG. 7 may be implemented by using a neural network model-based interaction signal processing apparatus. The apparatus includes the neural network model described in an embodiment corresponding to FIG. 5. In steps in FIG. 6 and FIG. 7, an encoder indicates a feature encoding module in a neural network model, a keyword decoder indicates a wakeup decoding module in the neural network model, and a position decoder indicates a position decoding module in the neural network model. First, refer to FIG. 6.

A voice signal captured by a microphone array may be divided into a plurality of voice frames based on a specific window length, and each voice frame is used as an interaction voice signal frame. In the following description, a t^{th} voice frame (t is a positive integer) may be used as an example for description. In step S601, frequency domain feature data It of the t^{th} voice frame may be input into the encoder. N frames of feature data in step S601 include frequency domain feature data (for example, FBANK feature data) obtained by using a filter bank after framing processing is performed on the interaction voice data.

B_{w} output by the encoder is high-dimensional multi-channel frequency domain feature data. The encoder may output B_{w} to a buffer. A neural network model-based interaction signal processing apparatus may input B_{w} into the keyword decoder in step S602. Ot output by the keyword decoder is a first prediction parameter. The first prediction parameter Ot may include a plurality of posterior probabilities, to form a set {Oti, 0≤i<N}, where Oₜᵢ is a posterior probability that the interaction voice signal includes an i^{th} type of wakeup voice signal, N indicates a preset quantity of types of wakeup voice signals, and different types of wakeup voice signals may have different indexes. Pt is a posterior probability obtained through smoothing processing.

In step S603, a maximum confidence P_{key_max} may be a maximum value in posterior probabilities obtained through smoothing processing. Pₜₕᵣₑₛₕ in step S604 is a first threshold. When P_{key_max} is greater than the first threshold, in step S605, an index Index_{key} of a wakeup voice signal corresponding to P_{key_max} is determined. The neural network model-based interaction signal processing apparatus may further input B_{w} in the buffer into the position decoder in S606, where Lt output by the position decoder is a second prediction parameter, and the second prediction parameter Lt may include a plurality of posterior probabilities, to form a set {Lₜⱼ, 0≤i<M}, where Lₜⱼ is a posterior probability that the wakeup voice signal in the interaction voice signal is from a j^{th} voice capturing object, M indicates a total quantity of voice capturing objects, and different voice capturing objects may have different indexes. A maximum value P_{pos_max} is determined from Lₜ, where Indexₚₒₛ is an index of a first voice capturing object corresponding to P_{pos_max}. The neural network model-based interaction signal processing apparatus outputs Index_{key} and Indexₚₒₛ in S607, and may synchronously output an index of the wakeup voice signal included in the interaction voice signal and an index of the first voice capturing object that the wakeup voicesignal is from, to determine, based on the indexes, which wakeup voice signal is included in the interaction voice signal and where the wakeup voice signal is from.

If it is determined that P_{key_max} is less than the first threshold in step S604, the procedure may be terminated, and the procedure is returned to step S601 to process a next voice frame.

Refer to FIG. 7. In step S701, It is frequency domain feature data, obtained by using the filter bank, of the interaction voice signal, and a high-dimensional feature output by the encoder is multi-channel frequency domain feature data of the interaction voice signal. In step S702, a first frame deleted from B_{w} is stored historical data, and this part of buffer may be released to store data currently output by the encoder. In step S703, Ot output by the keyword decoder is a first prediction parameter, the first prediction parameter Ot may include a plurality of posteriori probabilities, to form a set {Oₜᵢ, 0≤i<N}. The wakeup voice signal may include different types of wakeup audio units, and the interaction voice signal includes a plurality of voice segment signals that are sequentially divided based on capturing time, where Oₜᵢ is a posteriori probability that a t^{th} frame of voice segment signal includes an i^{th} type of wakeup audio unit, N indicates a preset quantity of types of wakeup audio units included in the wakeup voice signal, and different types of wakeup audio units may have different indexes. A smoothing algorithm in S703 may be an average smoothing algorithm.

In S704, posterior probabilities in Ot' are traversed to determine a confidence Pt, where Pt includes {*pₜᵢ*, 0 ≤ i ≤ N}. Each voice segment signal may correspondingly determine a prediction symbol (the prediction symbol may be any wakeup audio unit or a logical blank symbol), prediction symbols are sequentially arranged based on corresponding voice segment signals to obtain a prediction sequence, and the prediction sequence may be converted according to a specific rule to obtain a wakeup voice signal. For example, the prediction sequence may be converted according to a CTC algorithm to obtain the wakeup voice signal. For a same wakeup voice signal, there may be a plurality of types of prediction sequences. Herein, *pₜᵢ* indicates a same confidence of first t frames of voice segment signals and first t prediction symbols in the foregoing prediction sequence.

Ot' is traversed, to obtain a probability P_{tN}, that is, a probability that the interaction voice signal includes the wakeup voice signal, that the determined prediction symbols corresponding to the voice segment signals form the foregoing prediction sequence. Pₜₕᵣₑₛₕ is a preset first threshold.

If it is determined that P_{tN} is greater than or equal to the first threshold in step S705, the neural network-based interaction voice signal processing apparatus may input B_{w} into the position decoder in S706, and the position decoder outputs a second prediction parameter Lt based on multi-channel frequency domain feature data in B_{w}, where the second prediction parameter Lt may include a plurality of posterior probabilities, to form a set {Lₜⱼ, 0≤j<M}, where Lₜⱼ is a posterior probability that the wakeup voice signal in the interaction voice signal is from a j^{th} voice capturing object, M indicates a total quantity of voice capturing objects, and different voice capturing objects have different indexes. A maximum value P_{pos_max} is determined from Lₜ, where Indexₚₒₛ is an index of a first voice capturing object corresponding to P_{pos_max}.

A search path in S707 is the foregoing prediction sequence. The wakeup voice signal is obtained by converting the foregoing prediction sequence according to a specific conversion rule. An index corresponding to the wakeup voice signal is Index_{key}. The neural network model-based interaction signal processing apparatus outputs Index_{key} and Indexₚₒₛ in S708, and may synchronously output the index of the wakeup voice signal included in the interaction voice signal and an index of the first voice capturing object that the wakeup voice signal is from, to determine, based on the indexes, which wakeup voice signal is included in the interaction voice signal and where the wakeup voice signal is from.

If it is determined that P_{tN} is less than the first threshold in step S705, the procedure may be terminated, and the procedure is returned to step S701 to process a next frame of feature data.

An embodiment of this application further provides a neural network model training method. According to the method, a neural network model may be obtained through end-to-end training. Based on the neural network model, a first prediction parameter and a second prediction parameter may be output in parallel for an interaction voice signal, so that whether the interaction voice signal includes a wakeup voice signal and a source of the wakeup voice signal may be determined in an end-to-end manner. This achieves high determining efficiency, shortens a wakeup waiting delay of a user, and determines a plurality of single-channel voice signals at one time for an interaction voice signal including the plurality of single-channel voice signals, thereby reducing consumption of processing resources.

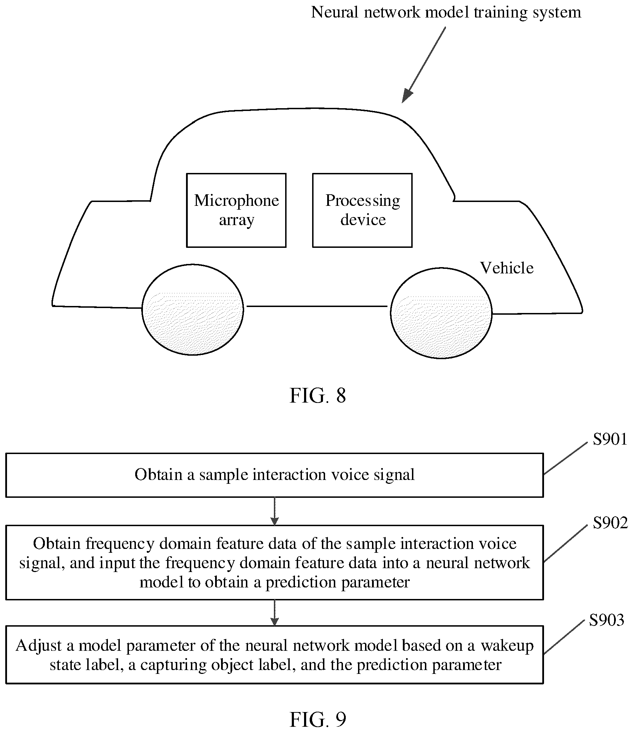

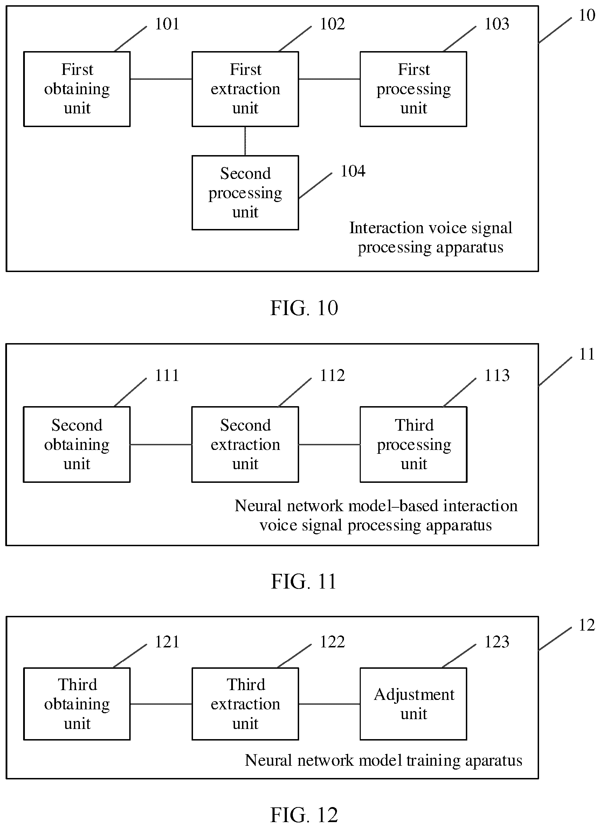

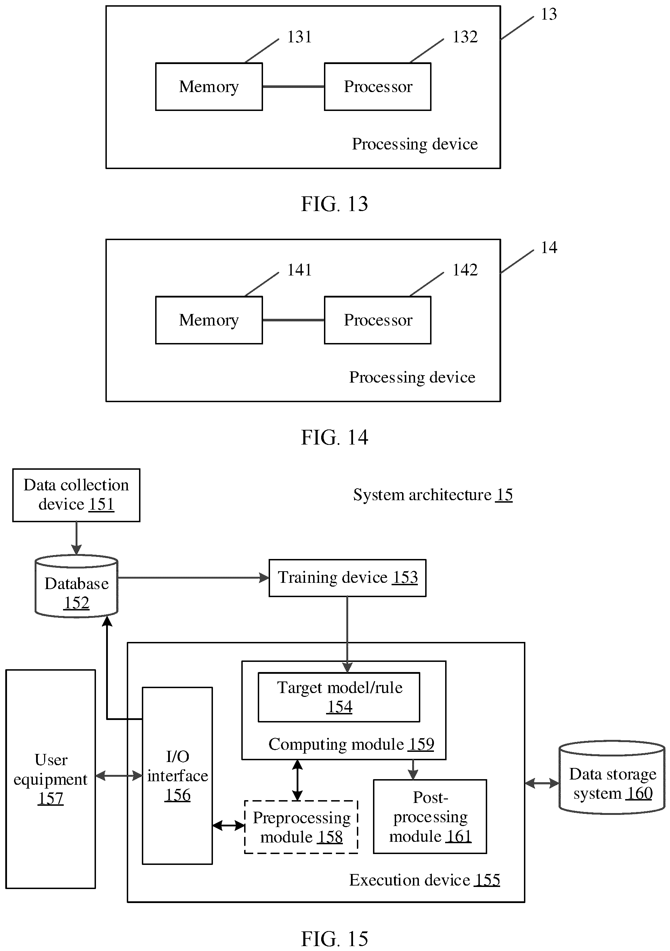

Optionally, the neural network model training method may be implemented based on a neural network training system. FIG. 8 is a diagram of a neural network training system according to an embodiment of this application. As shown in FIG. 8, the system may include a microphone array, a processing device, and a vehicle. The microphone array and the processing device may be disposed inside a vehicle body of the vehicle. The microphone array is configured to capture a sample interaction voice signal inside the vehicle body of the vehicle. The processing device is configured to perform the neural network model training method on the sample interaction voice signal, to obtain any neural network model in an embodiment corresponding to FIG. 3. For example, the processing device may be a processing device shown in FIG. 14 in the following, or may include a neural network model training apparatus 12 corresponding to FIG. 12 in the following.

The following specifically describes the method. The method may be applied to a neural network model training apparatus. The apparatus may be a processing device or a part of a processing device. The processing device may be a processing device in the system shown in FIG. 8, or may be a processing device applied to another system, for example, a processing device in a system in a home or office scenario. FIG. 9 is a schematic flowchart of a neural network model training method according to an embodiment of this application. As shown in FIG. 9, the method may include steps S901 to S903.

S901: Obtain a sample interaction voice signal.

There may be a plurality of sample interaction voice signals, and each sample interaction voice signal may include a wakeup state label and a capturing object label. The sample interaction voice signal may include at least one positive sample interaction voice signal and at least one negative sample interaction voice signal.

In an implementation, a wakeup state label of the positive sample interaction voice signal is different from a wakeup state label of the negative sample interaction voice signal. The wakeup state label of the positive sample interaction voice signal indicates that the positive sample interaction voice signal includes a wakeup voice signal, and a capturing object label of the positive sample interaction voice signal indicates that the wakeup voice signal in the positive sample interaction voice signal is from a first voice capturing object. For example, the first voice capturing object may be a first microphone channel or a first sound capturing area. The wakeup state label of the negative sample interaction voice signal indicates that the negative sample interaction voice signal does not include the wakeup voice signal, and a capturing object label of the negative sample interaction voice signal may be null. Further, there may be a plurality of types of wakeup voice signals set in a system, and different wakeup voice signals may correspond to different wakeup state labels. For example, there are two types of wakeup voice signals: a voice signal A (that is, a voice signal corresponding to "ni hao, Xiaoming") and a voice signal B (that is, a voice signal corresponding to "ni hao, Xiaohong"). A wakeup state label of a positive sample interaction voice signal including the voice signal A may be 1, a wakeup state label of a positive sample interaction voice signal including the voice signal B may be 2, and a wakeup state label of a negative sample interaction voice signal may be 0.

In another implementation, the wakeup voice signal includes at least one type of wakeup audio unit. The wakeup audio unit may be divided based on a pronunciation corresponding to the wakeup voice signal. The wakeup audio unit may be one or more of the following units: a character unit, a word unit, a letter unit, a phoneme unit, a syllable unit, and the like. The interaction voice signal may be sequentially divided into a plurality of voice segment signals based on capturing time.

Correspondingly, the sample interaction voice signal may include a plurality of types of wakeup state labels. One type of wakeup state label indicates that the sample interaction voice signal includes one type of wakeup audio unit, or indicates that the sample interaction voice signal includes an audio unit other than the wakeup audio unit. In comparison to learning of the wakeup state label by the neural network model at a granularity of the wakeup voice signal, with learning of the wakeup state label by the neural network model at a granularity of the wakeup audio unit, a neural network model with strong prediction performance may be obtained through training based on a small sample training set.

That one type of wakeup state label may indicate that the sample interaction voice signal includes an audio unit other than the wakeup audio unit may indicate that the one type of wakeup state label indicates that the sample interaction voice signal includes any audio unit other than the wakeup audio unit, that is, all audio units other than the wakeup audio unit are indicated by the one type of wakeup state label. For example, the wakeup voice signal is the voice signal corresponding to "ni hao, Xiaoming", and includes four wakeup audio units (which are a voice signal corresponding to a character "ni", a voice signal corresponding to a character "hao", a voice signal corresponding to a character "xiao", and a voice signal corresponding to a character "ming"). The wakeup state label may include five types (which are represented by 1, 2, 3, 4, and 5): 1 indicates that the sample interaction voice signal includes the voice signal corresponding to the character "ni", 2 indicates that the sample interaction voice signal includes the voice signal corresponding to the character "hao", 3 indicates that the sample interaction voice signal includes the voice signal corresponding to the character "xiao", 4 indicates that the sample interaction voice signal includes the voice signal corresponding to the character "ming", and 5 indicates that the sample interaction voice signal includes any voice signal other than voice signals respectively corresponding to the characters "ni", "hao", "xiao", and "ming". In this case, if the sample interaction voice signal is a voice signal corresponding to "ni hao, Xiaohong", the wakeup state label may be 1235. If the sample interaction voice signal is a voice signal corresponding to "Xiaoming, ni hao", the wakeup state label may be 3412. If the sample interaction voice signal is a voice signal corresponding to "ni hao, Xiaoming a", the wakeup state label may be 12345.

The foregoing wakeup state label may indicate that the sample interaction voice signal includes an audio unit other than the wakeup audio unit, or may indicate that the sample interaction voice signal includes some audio units (for example, one audio unit or several audio units) other than the wakeup audio unit, that is, some audio units other than the wakeup audio units are indicated by one type of wakeup state label. For example, the wakeup voice signal is the voice signal corresponding to "ni hao, Xiaoming", and includes four wakeup audio units (which are the voice signal corresponding to the character "ni", the voice signal corresponding to the character "hao", the voice signal corresponding to the character "xiao", and the voice signal corresponding to the character "ming"). A voice signal corresponding to a character "hong", and a voice signal corresponding to a character "gang" are two audio units other than the wakeup audio units. The wakeup state label may include seven types (which are represented by 1, 2, 3, 4, 5, 6, and 7): 1 indicates that the sample interaction voice signal includes the voice signal corresponding to the character "ni", 2 indicates that the sample interaction voice signal includes the voice signal corresponding to the character "hao", 3 indicates that the sample interaction voice signal includes the voice signal corresponding to the character "xiao", 4 indicates that the sample interaction voice signal includes the voice signal corresponding to the character "ming", 5 indicates that the sample voice signal includes the voice signal corresponding to the character "hong", 6 indicates that the sample interaction voice signal includes the voice signal corresponding to the character "gang", and 7 indicates that the sample interaction voice signal includes any voice signal other than the voice signals respectively corresponding to the characters "ni", "hao", "xiao", "ming", "hong", and "gang". In this case, if the sample interaction voice signal is a voice signal corresponding to "ni hao, Xiaohong", the wakeup state label may be 1235. If the sample interaction voice signal is a voice signal corresponding to "ni hao a, Xiaogang, Xiaoming", the wakeup state label may be 1273436. In a process of training the voice signal corresponding to the wakeup voice signal "ni hao, Xiaoming", a capability of the neural network model to determine the voice signal corresponding to "hong" or the voice signal corresponding to "gang" may be synchronously trained. When the wakeup voice signal of the system includes the voice signal corresponding to "hong" or the voice signal corresponding to "gang", wakeup determining may still be performed by the neural network model. This improves universality of the neural network model.

In the system corresponding to FIG. 8, the sample interaction voice signal obtained by the neural network model training apparatus may be captured by the microphone array. If the method is applied to another system, the sample interaction voice signal obtained by the neural network model training apparatus may be captured by a sound capturing device disposed in the another system.

Further, the sample interaction voice signal includes at least one single-channel voice signal, and different single-channel voice signals may be captured by different microphone channels. The sample interaction voice signal may include a single-channel voice signal. The single-channel voice signal may be captured by a separate microphone, or may be captured by a microphone channel in a microphone array, and another microphone channel in the microphone array may be in a disabled state. The sample interaction voice signal may alternatively include a plurality of single-channel voice signals, and the plurality of single-channel voice signals may be separately captured by different microphone channels in the microphone array. If the sample interaction voice signal includes a plurality of single-channel voice signals, the plurality of single-channel voice signals may be captured in a same time period.

S902: Obtain frequency domain feature data of the sample interaction voice signal, and input the frequency domain feature data into a neural network model to obtain a prediction parameter.

The frequency domain feature data of the sample interaction voice signal may be obtained through extraction by using a filter bank. Specifically, framing processing may be performed on the sample interaction voice signal to obtain a plurality of sample interaction voice signal frames, signal frame frequency domain feature data of the sample interaction voice signal frames is obtained by using the filter bank, and the frequency domain feature data of the interaction voice signal frame is determined based on the signal frame frequency domain feature data. Further, the signal frame frequency domain feature data of the sample interaction voice signal frames is spliced with signal frame frame frequency domain feature data of semantic-related frames, and the frequency domain feature data of the sample interaction voice signal is obtained based on a spliced signal frame frequency domain feature data combination. The semantic-related frame is one or more voice signal frames that belong to a same single-channel voice signal as the sample interaction voice signal frame and that are adjacent to the sample interaction voice signal frame in time domain. For a specific manner of obtaining the frequency domain feature data of the sample interaction voice signal, refer to the manner of obtaining the frequency domain feature data of the interaction voice signal in step S302 in an embodiment corresponding to FIG. 3. Details are not described.

The prediction parameter includes a first prediction parameter and a second prediction parameter, the first prediction parameter is used to determine that the sample interaction voice signal includes a wakeup voice signal, or is used to determine that the sample interaction voice signal does not include the wakeup voice signal, and the second prediction parameter is used to determine a source of the wakeup voice signal.

Further, in an implementation, the neural network model may be the neural network model shown in FIG. 4. For processing of the frequency domain feature data of the sample interaction voice signal by the neural network model, refer to the description of processing the frequency domain feature data of the interaction voice signal by the neural network model in the description of FIG. 4. Details are not described.

Further, there may be two implementations for an output of the neural network model. In one implementation, the neural network model may output the second prediction parameter when the first prediction parameter meets a first parameter condition, and does not output the second prediction parameter when the first prediction parameter does not meet the first parameter condition. For example, the first prediction parameter may include a first prediction probability, the first prediction probability is a probability that the sample interaction voice signal includes the wakeup voice signal, and the first parameter condition may be that the first prediction probability is greater than a first threshold. In another implementation, the neural network model may synchronously output the first prediction parameter and the second prediction parameter. It may be understood that in some cases, for example, when the first prediction parameter does not meet the first parameter condition, the second prediction parameter may be null.

S903: Adjust a model parameter of the neural network model based on the wakeup state label, the capturing object label, and the prediction parameter.

The model parameter of the neural network model may include a weight matrix and the like. In a process of adjusting the model parameter, an error between the prediction parameter and the labels (including the wakeup state label and the capturing obj ect label) of the sample interaction voice signal may be determined based on the wakeup state label, the capturing object label, and the prediction parameter. The model parameter of the neural network model is adjusted based on the error, so that a reconstruction error of the neural network model is gradually reduced. For example, the model parameter is adjusted by using an error back propagation (back propagation, BP) algorithm, to implement training of the neural network model. Specifically, a model loss function may be determined based on the wakeup state label, the capturing object label, and the prediction parameter, and the model parameter of the neural network model is gradually corrected by solving a convergence condition of the model loss function.

Further, the model loss function may include a wakeup loss function and a positioning loss function. The wakeup loss function may be determined based on the first prediction parameter and the wakeup state label, the positioning loss function may be determined based on the second prediction parameter and the capturing object label, and the model parameter of the neural network model is adjusted according to the wakeup loss function and the positioning loss function. For example, the first prediction parameter includes a first prediction probability output by a softmax output layer of a wakeup decoding module, the second prediction parameter includes a second prediction probability output by a softmax output layer of a position decoding module, and the wakeup loss function and the positioning loss function may be cross entropy loss (cross entropy loss, ce loss) functions.

Further, in an implementation, the wakeup voice signal includes a plurality of wakeup audio units. The wakeup state label may include labels respectively corresponding to a plurality of types of wakeup audio units, the sample interaction voice signal may be sequentially divided into a plurality of voice segment signals based on capturing time, the first prediction parameter includes a plurality of first prediction probabilities, and one first prediction probability indicates a probability that the voice segment signal includes one wakeup audio unit. In this case, the wakeup loss function may be a CTC loss function determined based on the first prediction probability and the wakeup state label.

The wakeup state label may indicate one type of wakeup voice signal included in the sample interaction voice signal, or indicate that the sample voice signal does not include the wakeup voice signal.

If the wakeup state label indicates the one type of wakeup voice signal included in the sample interaction voice signal, in determining the CTC loss function, an audio unit sequence that meets a specified matching rule with the wakeup voice signal may be first determined, where the audio unit sequence includes a first quantity of prediction symbols sequentially arranged, and the first quantity is a quantity of voice segment signals included in the sample interaction voice signal, the prediction symbol includes any wakeup audio unit or a logical blank symbol (for descriptions of the logical blank symbol, refer to corresponding descriptions in an embodiment corresponding to FIG. 3). The specified matching rule may be: First, a plurality of consecutive and same wakeup audio units that are before a foremost logical blank symbol in the audio unit sequence are deleted to one, a plurality of consecutive and same wakeup audio units that are after a last logical blank symbol in the audio unit sequence are deleted to one, same wakeup audio units that are between any two logical blank symbols are deleted to one, and then the logical blank symbols are deleted to obtain the wakeup voice signal. After the audio unit sequence that meets the specified matching rule is determined, occurrence probabilities of audio unit sequences are determined based on the first prediction probabilities, and a prediction probability of the wakeup voice signal indicated by the wakeup state label may be obtained based on a sum of the occurrence probabilities of the audio unit sequences, to obtain the CTC loss function.

If the wakeup state label indicates that the sample voice signal does not include the wakeup voice signal, a prediction probability that the sample interaction voice signal includes each wakeup voice signal may also be determined with reference to the foregoing manner, so that a prediction probability that the sample interaction voice signal does not include the wakeup voice signal may be determined, and the CTC loss function may be obtained.

A trained neural network model may be obtained by performing steps S901 to S903. The model is a neural network model used to perform end-to-end determining on an interaction voice signal obtained in specific voice capturing space, to determine whether the interaction voice signal includes a wakeup voice signal, and determine a source of the wakeup voice signal. It may be understood that, when the neural network model obtained through training meets the following two use conditions, prediction performance of the neural network model is good: In a first use condition, the voice capturing space and the space in which the sample interaction voice signal is obtained in step S901 are same space (for example, space inside a same vehicle), or are space with a same parameter (for example, space inside a vehicle of a same model); and in a second use condition, a capturing device (for example, a microphone or a microphone array) for an interaction voice signal and a capturing device for the sample interaction voice signal in step S901 are a same device (for example, a microphone array inside a same vehicle), or are devices with same parameters (for example, microphone arrays that are inside vehicles of a same model and whose deployment positions and parameters are the same).

The following describes a related apparatus, a device, or a system provided in embodiments of this application. First, an interaction voice signal processing apparatus is described. FIG. 10 is a diagram of a structure of an interaction voice signal processing apparatus according to an embodiment of this application. As shown in FIG. 10, an apparatus 10 may include a first obtaining unit 101, a first extraction unit 102, a first processing unit 103, and a second processing unit 104.

The first obtaining unit 101 is configured to obtain an interaction voice signal, where the interaction voice signal includes at least one single-channel voice signal.

The first extraction unit 102 is configured to determine multi-channel frequency domain feature data of the interaction voice signal.

The first processing unit 103 is configured to determine, based on the multi-channel frequency domain feature data, that the interaction voice signal includes a wakeup voice signal.

The second processing unit 104 is configured to determine, based on the multi-channel frequency domain feature data, that the wakeup voice signal in the interaction voice signal is from a first voice capturing object.

It should be understood that the interaction voice signal processing apparatus 10 may further include another unit. For a specific implementation of each unit, refer to corresponding descriptions in an embodiment corresponding to FIG. 2. Details are not described in embodiments of this application.

An embodiment of this application further provides a neural network model-based interaction voice signal processing apparatus. FIG. 11 is a diagram of a structure of the neural network model-based interaction voice signal processing apparatus according to an embodiment of this application. As shown in FIG. 11, an apparatus 11 may include a second obtaining unit 111, a second extraction unit 112, and a third processing unit 113.

The second obtaining unit 111 is configured to obtain an interaction voice signal.

The second extraction unit 112 is configured to obtain frequency domain feature data of the interaction voice signal.

The third processing unit 113 is configured to input the frequency domain feature data into a neural network model, and output a prediction parameter, where the prediction parameter includes a first prediction parameter and a second prediction parameter, the first prediction parameter is used to determine that the interaction voice signal includes a wakeup voice signal, and the second prediction parameter is used to determine that the wakeup voice signal in the interaction voice signal is from a first voice capturing object.

It should be understood that the neural network model-based interaction voice signal processing apparatus 11 may further include another unit. For a specific implementation of each unit, refer to corresponding descriptions in an embodiment corresponding to FIG. 3. Details are not described in embodiments of this application.

An embodiment of this application further provides a neural network model training apparatus. FIG. 12 is a diagram of a structure of a neural network model training apparatus according to an embodiment of this application. As shown in FIG. 12, an apparatus 12 may include a third obtaining unit 121, a third extraction unit 122, and an adjustment unit 123.

The third obtaining unit 121 is configured to obtain a sample interaction voice signal, where the sample interaction voice signal includes a wakeup state label and a capturing object label.

The third extraction unit 122 is configured to obtain frequency domain feature data of the sample interaction voice signal, and input the frequency domain feature data into a neural network model to obtain a prediction parameter, where the prediction parameter includes a first prediction parameter and a second prediction parameter, the first prediction parameter is used to determine that the sample interaction voice signal includes a wakeup voice signal, or is used to determine that the sample interaction voice signal does not include the wakeup voice signal. The second prediction parameter is used to determine that the wakeup voice signal is from a first voice capturing object.

The adjustment unit 123 is configured to adjust a model parameter of the neural network model based on the wakeup state label, the capturing object label, and the prediction parameter.

It should be understood that the neural network model training apparatus 12 may further include another unit. For a specific implementation of each unit, refer to corresponding descriptions in an embodiment corresponding to FIG. 9. Details are not described in embodiments of this application.

FIG. 13 is a diagram of a structure of a processing device according to an embodiment of this application. A processing device 13 includes at least a memory 131 and a processor 132. The memory 131 and the processor 132 are interconnected through a line. The memory 131 is configured to store instructions. The processor 132 is configured to run the instructions stored in the memory 131, to perform the method steps in an embodiment corresponding to FIG. 2 or FIG. 3.

FIG. 14 is a diagram of a structure of another processing device according to an embodiment of this application. A processing device 14 includes at least a memory 141 and a processor 142. The memory 141 and the processor 142 are interconnected through a line. The memory 141 is configured to store instructions. The processor 142 is configured to run the instructions stored in the memory 141, to perform the method steps in an embodiment corresponding to FIG. 9.

An embodiment of this application further provides a vehicle, where the vehicle includes a vehicle body, the vehicle body includes a microphone array, and the microphone array is configured to capture an interaction voice signal. The vehicle further includes the interaction voice signal processing apparatus 10 shown in FIG. 10, or includes the neural network model-based interaction voice signal processing apparatus 11 shown in FIG. 11, or includes the processing device 13 shown in FIG. 13.

FIG. 15 is a diagram of a system architecture according to an embodiment of this application. In a system architecture 15, a data collection device 151 is configured to collect training data. For the neural network model training method in embodiments of this application, the training data may include a sample interaction voice signal and labels (including a wakeup state label and a capturing object label) corresponding to the sample interaction voice signal.

After the training data is collected, the data collection device 151 may store the training data in a database 152. A training device 153 obtains the sample interaction voice signal in the database 152, performs the neural network model training method provided in embodiments of this application, for example, may process the sample interaction voice signal in the database 152 to obtain a prediction result, compares the prediction result of the sample interaction voice signal with a label corresponding to the sample interaction voice signal, and adjusts a model parameter of the neural network model until a difference between the prediction result of the sample interaction voice signal output by the training device 153 and the label corresponding to the sample interaction voice signal is less than a specific threshold, so that training of a target model/rule 154 is completed.

In embodiments of this application, the target model/rule 154 may be a neural network model obtained after training is performed based on the neural network model training method in this application, or the target model/rule 154 may be the neural network model training apparatus in embodiments of this application. The target model/rule 154 can implement the neural network model-based interaction voice signal processing method provided in embodiments of this application. To be specific, an interaction voice signal is input to the target model/rule 154 after related preprocessing, to obtain prediction results of the interaction voice signal through prediction (that is, a prediction result of whether a wakeup voice signal is included, and a prediction result of a source of the wakeup voice signal when the wakeup voice signal is included).

It should be noted that, during actual application, the training data maintained in the database 152 is not necessarily collected by the data collection device 151, but may be received from another device. In addition, the training device 153 does not necessarily train the target model/rule 154 completely based on the training data maintained in the database 152, or may obtain the training data from a cloud or another place to train the neural network model. The foregoing descriptions should not be construed as a limitation on embodiments of this application.

The target model/rule 154 obtained through training by the training device 153 may be applied to different systems or devices, for example, applied to an execution device 155 shown in FIG. 15. The execution device 155 may be a terminal, for example, a mobile phone, a tablet computer, a notebook computer, augmented reality (augmented reality, AR) / virtual reality (virtual reality, VR), or an in-vehicle terminal, or may be a server, a cloud device, or may be a part of a device like a terminal, for example, may be a wakeup detection engine. In FIG. 15, the execution device 155 is configured with an input/output (input/output, I/O) interface 156, which is configured to exchange data with an external device, and configured to input data to the I/O interface 156 by using user equipment 157. The data may include a network structure of a neural network model, and the like.

A preprocessing module 158 may be configured to perform preprocessing based on input data (for example, an interaction voice signal) received by the I/O interface 156, for example, perform processing such as filtering and noise reduction. Optionally, the system architecture may include a plurality of preprocessing modules 158, or may not include the preprocessing module 158, and directly process the input data by using a computing module 159.

When the preprocessing module 158 in the execution device 155 preprocesses the input data, or the computing module 159 in the execution device 155 performs a related processing process such as computing, the execution device 155 may invoke data, code, and the like in a data storage system 160 to apply to corresponding processing, or may store, in the data storage system 160, data, instructions, and the like that are obtained through corresponding processing.

Finally, the computing module 159 sends the prediction results obtained by the target model/rule 154 to a post-processing module 161. For example, the post-processing module 161 may be a voice interaction engine, or may send the prediction results to user equipment 157 by using the I/O interface 156.

It should be noted that a position relationship between devices, components, modules, and the like shown in FIG. 15 does not constitute any limitation. For example, in FIG. 15, the data storage system 160 is an external memory relative to the execution device 155. In an alternative manner, the data storage system 160 may also be disposed in the execution device 155.

The neural network model-based interaction voice signal processing method and apparatus in embodiments of this application may be further used to expand training data in the database 152. The I/O interface 156 of the execution device 155 shown in FIG. 15 may send, as training data, an interaction voice signal processed by the execution device 155 and prediction results of the interaction voice signal to the database 152, so that the training data maintained by the database 152 is richer, thereby providing richer training data for training work of the training device 153.

An embodiment of this application further provides a chip. The chip includes a processor and a data interface. The processor may be configured to read, through the data interface, instructions stored in a memory, to perform the steps in any interaction voice signal processing method provided in embodiments of this application, or perform steps in any neural network model-based interaction voice signal processing method provided in embodiments of this application, or perform any neural network model training method provided in embodiments of this application.

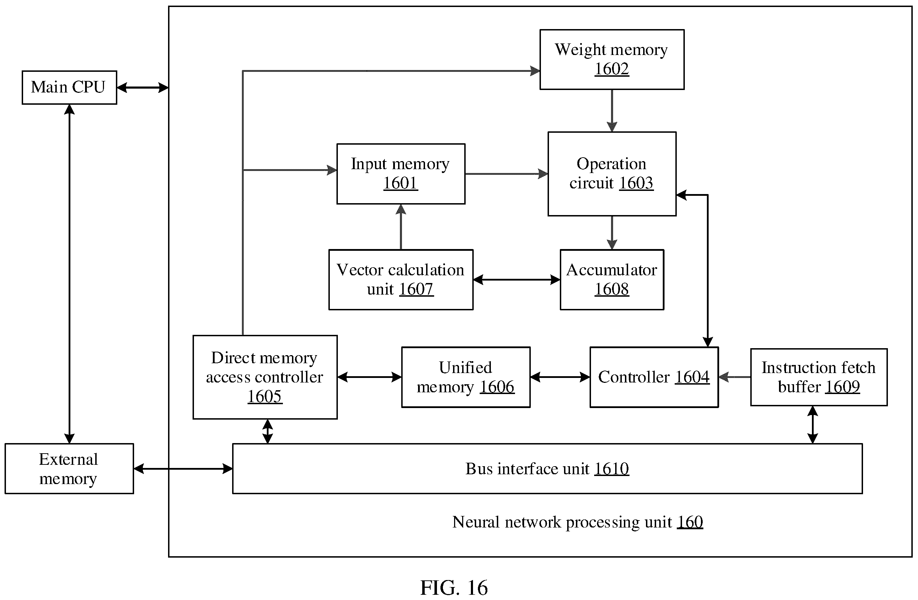

Further, FIG. 16 is a diagram of a structure of hardware of a chip according to an embodiment of this application. As shown in FIG. 16, a processor of the chip may include a neural network processing unit 160. The chip may be disposed in the execution device 155 shown in FIG. 15, and is configured to complete computing work of the computing module 159 in FIG. 15. Alternatively, the chip may be disposed in the training device 153 shown in FIG. 15, to complete training work of the training device 153 and obtain the target model/rule 154. In embodiments of this application, algorithms of all layers of networks in the neural network model may be implemented in the chip shown in FIG. 16.

The neural network processing unit (Neural Network Processing Unit, NPU) 160 is mounted to a main CPU (central processing unit, central processing unit) as a coprocessor, and the main CPU allocates a task. A core part of the NPU is an operation circuit 1603, and a controller 1604 controls the operation circuit 1603 to extract data in a memory (a weight memory or an input memory) and perform an operation.

In some implementations, the operation circuit 1603 internally includes a plurality of process elements (process elements, PEs). In some implementations, the operation circuit 1603 is a two-dimensional systolic array. The operation circuit 1603 may alternatively be a one-dimensional systolic array or another electronic circuit that can perform mathematical operations such as multiplication and addition. In some implementations, the operation circuit 1603 is a general-purpose matrix processor.

For example, it is assumed that there is an input matrix A, a weight matrix B, and an output matrix C. The operation circuit 1603 fetches data corresponding to the matrix B from a weight memory 1602, and buffers the data on each PE in the operation circuit 1603. The operation circuit 1603 fetches data of the matrix A from an input memory 1601, to perform a matrix operation on the matrix B, and stores an obtained partial result or an obtained final result of the matrix into an accumulator (accumulator) 1608.

A vector calculation unit 1607 may perform further processing on an output of the operation circuit 1603, for example, vector multiplication, vector addition, an exponential operation, a logarithm operation, and value comparison. For example, the vector calculation unit 1607 may be configured to perform network calculation, such as pooling (pooling), batch normalization (batch normalization), or local response normalization (local response normalization), at a non-convolution/non-fully connected (fully connected, FC) layer in a neural network.

In some implementations, the vector calculation unit 1607 can store, in a unified memory 1606, a processed output vector. For example, the vector calculation unit 1607 may apply a non-linear function to an output of the operation circuit 1603, for example, a vector of an accumulated value, to generate an activation value. In some implementations, the vector calculation unit 1607 generates a normalized value, a combined value, or both. In some implementations, the processed output vector can be used as an activation input of the operation circuit 1603, for example, to be used in a subsequent layer in the neural network.

A unified memory 1606 is configured to store input data and output data.

A direct memory access controller (direct memory access controller, DMAC) 1605 transfers input data in the external memory to the input memory 1601 and/or the unified memory 1606, stores weight data in the external memory in the weight memory 1602, and stores the data in the unified memory 1606 in the external memory. The data interface of the chip may include a bus interface unit (bus interface unit, BIU) 1610, which is configured to implement interaction between the main CPU, the DMAC, and an instruction fetch buffer 1609 through the bus.

The instruction fetch buffer (instruction fetch buffer) 1609 connected to the controller 1604 is configured to store instructions used by the controller 1604.

The controller 1604 is configured to invoke the instructions buffered in the instruction fetch buffer 1609, to control a working process of an operation accelerator.

Generally, the unified memory 1606, the input memory 1601, the weight memory 1602, and the instruction fetch buffer 1609 each are an on-chip (On-Chip) memory. The external memory is a memory outside the NPU 160. The external memory may be a double data rate synchronous dynamic random access memory (double data rate synchronous dynamic random access memory, DDR SDRAM), a high bandwidth memory (high bandwidth memory, HBM), or another readable and writable memory.

An operation at each layer in the neural network model in embodiments of this application may be performed by the operation circuit 1603 or the vector calculation unit 1607.

An embodiment of this application further provides a computer program product, including instructions. When the computer program product runs on a computer, the computer runs the instructions to perform any interaction voice signal processing method provided in embodiments of this application, or performs any neural network model-based interaction voice signal processing method provided in embodiments of this application, or performs any neural network model training method provided in embodiments of this application.

An embodiment of this application further provides a computer storage medium. The computer-readable storage medium stores instructions, and when the instructions are run on a computer or a processor, the computer or the processor performs one or more steps in the method in any one of the foregoing embodiments. When each component module of the foregoing apparatus is implemented in a form of a software functional unit and sold or used as an independent product, the component module may be stored in the computer-readable storage medium. Based on such an understanding, the technical solutions of this application essentially, or the part having substantive features and notable progress, or all or some of the technical solutions may be implemented in the form of a software product. The computer product is stored in a computer-readable storage medium and includes several instructions for instructing a computer device (which may be a personal computer, a server, a network device, or the like) to perform all or some of the steps of the methods described in embodiments of this application. The foregoing storage medium includes: any medium that can store program code, like a USB flash drive, a removable hard disk, a read-only memory (read-only memory, ROM), a random access memory (random access memory, RAM), a magnetic disk, or an optical disc.

The computer-readable storage medium may be an internal storage unit of the device described in the foregoing embodiments, for example, a hard disk or a memory. The computer-readable storage medium may also be an external storage device of the foregoing device, for example, a plug-in hard disk, a smart media card (Smart Media Card, SMC), a secure digital (Secure Digital, SD) card, or a flash memory card (Flash Card). Further, the computer-readable storage medium may include both an internal storage unit of the device and an external storage device. The computer-readable storage medium is configured to store the computer program and other programs and data required by the device. The computer-readable storage medium may be further configured to temporarily store data that has been output or is to be output.

A person of ordinary skill in the art may understand that all or some of the procedures of the methods in embodiments may be implemented by a computer program instructing relevant hardware. The computer program may be stored in a computer-readable storage medium. When the program is run, the procedures of the methods in embodiments are performed. The foregoing storage medium includes any medium that can store program code, like a ROM, a RAM, a magnetic disk, or an optical disc.

Steps in the methods in embodiments of this application may be adjusted, combined, or deleted according to an actual requirement.

Modules in the apparatuses in embodiments of this application may be combined, divided, or deleted according to an actual requirement.

It may be understood that a person of ordinary skill in the art may be aware that, in combination with the examples described in embodiments disclosed in this application, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

A person skilled in the art can understand that functions described with reference to various illustrative logical blocks, modules, and algorithm steps disclosed in embodiments of this application may be implemented by hardware, software, firmware, or any combination thereof. If implemented by software, the functions described with reference to the illustrative logical blocks, modules, and steps may be stored in or transmitted over a computer-readable medium as one or more instructions or code and executed by a hardware-based processing unit. The computer-readable medium may include a computer-readable storage medium, which corresponds to a tangible medium like a data storage medium, or a communication medium including any medium that facilitates transfer of a computer program from one place to another (for example, according to a communication protocol). In this manner, the computer-readable medium may generally correspond to: (1) a non-transitory tangible computer-readable storage medium, or (2) a communication medium like a signal or a carrier. The data storage medium may be any available medium that may be accessed by one or more computers or one or more processors to retrieve instructions, code, and/or a data structure used to implement the technology described in this application. A computer program product may include a computer-readable medium. It may be clearly understood by a person skilled in the art that, for the purpose of convenient and brief description, for detailed working processes of the foregoing systems, apparatuses, and units, refer to corresponding processes in the foregoing method embodiments. Details are not described herein.

In the several embodiments provided in this application, it should be understood that the disclosed systems, apparatuses, and methods may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes: any medium that can store program code, like a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An interaction voice signal processing method, comprising:
obtaining an interaction voice signal, wherein the interaction voice signal comprises at least one single-channel voice signal;
determining multi-channel frequency domain feature data of the interaction voice signal, wherein the multi-channel frequency domain feature data indicates a frequency domain feature of the at least one single-channel voice signal;
determining, based on the multi-channel frequency domain feature data, that the interaction voice signal comprises a wakeup voice signal; and
determining, based on the multi-channel frequency domain feature data, that the wakeup voice signal in the interaction voice signal is from a first voice capturing object.

2. The method according to claim 1, wherein the determining multi-channel frequency domain feature data of the interaction voice signal comprises:
performing framing processing on the single-channel voice signal to obtain a plurality of interaction voice signal frames;
obtaining signal frame frequency domain feature data of the interaction voice signal frames by using a filter bank; and
determining the multi-channel frequency domain feature data based on the signal frame frequency domain feature data.

3. The method according to claim 2, wherein the determining the multi-channel frequency domain feature data based on the signal frame frequency domain feature data comprises:
splicing the signal frame frequency domain feature data of the interaction voice signal frames with signal frame frequency domain feature data of semantic-related frames, wherein the semantic-related frame is one or more voice signal frames that belong to a same single-channel voice signal as the interaction voice signal frame and that are adjacent to the interaction voice signal frame in time domain; and
determining the multi-channel frequency domain feature data based on spliced signal frame frequency domain feature data.

4. The method according to any one of claims 1 to 3, wherein the determining, based on the multi-channel frequency domain feature data, that the interaction voice signal comprises a wakeup voice signal comprises:
determining a first prediction parameter based on the multi-channel frequency domain feature data, wherein the first prediction parameter is used to determine a probability that the interaction voice signal comprises the wakeup voice signal; and
when the first prediction parameter meets a first parameter condition, determining that the interaction voice signal comprises the wakeup voice signal.

5. The method according to claim 4, wherein the wakeup voice signal comprises at least one type of wakeup audio unit, the interaction voice signal comprises a plurality of voice segment signals sequentially divided based on capturing time, and the first prediction parameter indicates a probability that the voice segment signal comprises the wakeup audio unit.

6. The method according to any one of claims 1 to 5, wherein the first voice capturing object comprises any one of the following: a first microphone channel, a first sound capturing area, or a target timbre character in a second sound capturing area.

7. The method according to claim 6, wherein when the first voice capturing object comprises a child timbre character in the second sound capturing area, the method further comprises: sending an operation mode instruction, wherein the operation mode instruction is used to trigger a system to enter an operation mode for a child.

8. A neural network model-based interaction voice signal processing method, comprising:
obtaining an interaction voice signal;
obtaining frequency domain feature data of the interaction voice signal, wherein the frequency domain feature data indicates a frequency domain feature of the interaction voice signal; and
inputting the frequency domain feature data into a neural network model, and outputting a prediction parameter, wherein the prediction parameter comprises a first prediction parameter and a second prediction parameter, the first prediction parameter is used to determine that the interaction voice signal comprises a wakeup voice signal, and the second prediction parameter is used to determine that the wakeup voice signal in the interaction voice signal is from a first voice capturing object.

9. The method according to claim 8, wherein the obtaining frequency domain feature data of the interaction voice signal comprises:
performing framing processing on the interaction voice signal to obtain a plurality of interaction voice signal frames;
obtaining signal frame frequency domain feature data of the interaction voice signal frames by using a filter bank; and
determining the frequency domain feature data of the interaction voice signal based on the signal frame frequency domain feature data.

10. The method according to claim 9, wherein the interaction voice signal comprises at least one single-channel voice signal, the frequency domain feature data comprises at least one piece of single-channel frequency domain feature data, and the single-channel frequency domain feature data indicates a frequency domain feature of the single-channel voice signal.

11. The method according to claim 10, wherein the determining the frequency domain feature data of the interaction voice signal based on the signal frame frequency domain feature data comprises:
splicing the signal frame frequency domain feature data of the interaction voice signal frames with signal frame frequency domain feature data of semantic-related frames, wherein the semantic-related frame is one or more voice signal frames that belong to a same single-channel voice signal as the interaction voice signal frame and that are adjacent to the interaction voice signal frame in time domain; and
obtaining the frequency domain feature data of the interaction voice signal based on a spliced signal frame frequency domain feature data combination.

12. The method according to any one of claims 8 to 11, wherein the wakeup voice signal comprises at least one wakeup audio unit, the interaction voice signal comprises a plurality of voice segment signals sequentially divided based on capturing time, the first prediction parameter comprises a plurality of first prediction probabilities, and the first prediction probability indicates a probability that the voice segment signal comprises each wakeup audio unit.

13. The method according to any one of claims 8 to 12, wherein when the first prediction parameter meets a first parameter condition, the first prediction parameter is used to determine that the interaction voice signal comprises the wakeup voice signal; or
when the first prediction parameter does not meet the first parameter condition, the first prediction parameter is used to determine that the interaction voice signal does not comprise the wakeup voice signal.

14. A neural network model training method, wherein the method comprises:
obtaining a sample interaction voice signal, wherein the sample interaction voice signal comprises a wakeup state label and a capturing object label;
obtaining frequency domain feature data of the sample interaction voice signal, and inputting the frequency domain feature data into a neural network model to obtain a prediction parameter, wherein the prediction parameter comprises a first prediction parameter and a second prediction parameter, the first prediction parameter is used to determine that the sample interaction voice signal comprises a wakeup voice signal, or is used to determine that the sample interaction voice signal does not comprise the wakeup voice signal, and the second prediction parameter is used to determine a source of the wakeup voice signal; and
adjusting a model parameter of the neural network model based on the wakeup state label, the capturing object label, and the prediction parameter.

15. The method according to claim 14, wherein the obtaining frequency domain feature data of the sample interaction voice signal comprises:
performing framing processing on the sample interaction voice signal to obtain a plurality of sample interaction voice signal frames;
obtaining signal frame frequency domain feature data of the sample interaction voice signal frames by using a filter bank; and
determining the frequency domain feature data of the sample interaction voice signal based on the signal frame frequency domain feature data.

16. The method according to claim 15, wherein the obtaining frequency domain feature data of the sample interaction voice signal comprises:
splicing the signal frame frequency domain feature data of the sample interaction voice signal frames with signal frame frequency domain feature data of semantic-related frames, wherein the semantic-related frame is one or more voice signal frames that belong to a same single-channel voice signal as the sample interaction voice signal frame and that are adjacent to the sample interaction voice signal frame in time domain; and
obtaining the frequency domain feature data of the sample interaction voice signal based on a spliced signal frame frequency domain feature data combination.

17. The method according to any one of claims 14 to 16, wherein the wakeup voice signal comprises at least one type of wakeup audio unit, there are a plurality of types of wakeup state labels, and one type of wakeup state label indicates that the sample interaction voice signal comprises one type of wakeup audio unit, or indicates that the sample interaction voice signal comprises an audio unit other than the wakeup audio unit.

18. The method according to claim 17, wherein the wakeup audio unit comprises one or more of the following units: a character unit, a word unit, a letter unit, a phoneme unit, and a syllable unit.

19. The method according to any one of claims 14 to 18, wherein the capturing object label indicates that the sample interaction voice signal is from a first voice capturing object, and the first voice capturing object comprises any one of the following objects: a first microphone channel, a first sound capturing area, or a target timbre character in a second sound capturing area.

20. The method according to any one of claims 14 to 19, wherein the adjusting a model parameter of the neural network model based on the wakeup state label, the capturing object label, and the prediction parameter comprises:
determining a wakeup loss function based on the first prediction parameter and the wakeup state label;
determining a positioning loss function based on the second prediction parameter and the capturing object label; and
adjusting the model parameter of the neural network model based on the wakeup loss function and the positioning loss function.

21. An interaction voice signal processing apparatus, wherein the apparatus comprises:
a first obtaining unit, configured to obtain an interaction voice signal, wherein the interaction voice signal comprises at least one single-channel voice signal;
a first extraction unit, configured to determine multi-channel frequency domain feature data of the interaction voice signal;
a first processing unit, configured to determine, based on the multi-channel frequency domain feature data, that the interaction voice signal comprises a wakeup voice signal; and
a second processing unit, configured to determine, based on the multi-channel frequency domain feature data, that the wakeup voice signal in the interaction voice signal is from a first voice capturing object.

22. A neural network model-based interaction voice signal processing apparatus, wherein the apparatus comprises:
a second obtaining unit, configured to obtain an interaction voice signal;
a second extraction unit, configured to obtain frequency domain feature data of the interaction voice signal; and
a third processing unit, configured to input the frequency domain feature data into a neural network model, and output a prediction parameter, wherein the prediction parameter comprises a first prediction parameter and a second prediction parameter, the first prediction parameter is used to determine that the interaction voice signal comprises a wakeup voice signal, and the second prediction parameter is used to determine that the wakeup voice signal in the interaction voice signal is from a first voice capturing object.

23. A neural network model training apparatus, wherein the apparatus comprises:
a third obtaining unit, configured to obtain a sample interaction voice signal, wherein the sample interaction voice signal comprises a wakeup state label and a capturing object label;
a third extraction unit, configured to obtain frequency domain feature data of the sample interaction voice signal, and input the frequency domain feature data into a neural network model to obtain a prediction parameter, wherein the prediction parameter comprises a first prediction parameter and a second prediction parameter, the first prediction parameter is used to determine that the sample interaction voice signal comprises a wakeup voice signal, or is used to determine that the sample interaction voice signal does not comprise the wakeup voice signal, and the second prediction parameter is used to determine that the wakeup voice signal is from a first voice capturing object; and
an adjustment unit, configured to adjust a model parameter of the neural network model based on the wakeup state label, the capturing object label, and the prediction parameter.

24. A processing device, wherein the device comprises a memory and a processor, the memory is configured to store instructions, and the processor is configured to run the instructions in the memory, to perform the interaction voice signal processing method according to any one of claims 1 to 7, or perform the neural network model-based interaction voice signal processing method according to any one of claims 8 to 13.

25. A processing device, wherein the device comprises a memory and a processor, the memory is configured to store instructions, and the processor is configured to execute the instructions in the memory, to perform the neural network model training method according to any one of claims 14 to 20.

26. A vehicle, wherein the vehicle comprises a vehicle body, the vehicle body comprises a microphone array, and the microphone array is configured to capture an interaction voice signal; and
the vehicle further comprises any one of the following apparatuses or devices for processing the interaction voice signal: the interaction voice signal processing apparatus according to claim 21, the neural network model-based interaction voice signal processing apparatus according to claim 22, and the processing device according to claim 24.

27. A neural network model training system, comprising a microphone array, a processing device, and a vehicle, wherein the microphone array and the processing device are disposed inside a vehicle body of the vehicle;
the microphone array is configured to capture a sample interaction voice signal inside the vehicle body of the vehicle; and
the processing device is configured to perform, on the sample interaction voice signal, the neural network model training method according to any one of claims 14 to 20, to obtain the neural network model according to any one of claims 8 to 13.

28. A computer program product, comprising instructions, wherein when the computer program product runs on a computer, the computer runs the instructions to perform the interaction voice signal processing method according to any one of claims 1 to 7, or perform the neural network model-based interaction voice signal processing method according to any one of claims 8 to 13, or perform the neural network model training method according to any one of claims 14 to 20.

29. A chip, wherein the chip comprises a processor and a data interface, and the processor reads, through the data interface, instructions stored in a memory, to perform the interaction voice signal processing method according to any one of claims 1 to 7, or perform the neural network model-based interaction voice signal processing method according to any one of claims 8 to 13, or perform the neural network model training method according to any one of claims 14 to 20.

30. A computer-readable storage medium, wherein the computer-readable medium stores program code for execution by a device, the program code is used to perform the interaction voice signal processing method according to any one of claims 1 to 7, or perform the neural network model-based interaction voice signal processing method according to any one of claims 8 to 13, or perform the neural network model training method according to any one of claims 14 to 20.
